# EUROPÄISCHE PATENTSCHRIFT

(11) **EP 3 677 706 B1**
(45) Veröffentlichungstag und Bekanntmachung des Hinweises auf die Patenterteilung: **06.03.2024**
(21) Anmeldenummer: 19219317.5
(22) Anmeldetag: 23.12.2019
(51) Int. Cl.: D21H 13/26, D21H 17/24, C23F 11/02

(54) **ZUSAMMENSETZUNGEN UND VERFAHREN ZUR VORBEHANDLUNG VON SUBSTRATEN FÜR DIE NACHFOLGENDE FIXIERUNG VON DAMPFPHASEN-KORROSIONSINHIBITOREN**
COMPOSITIONS AND METHOD FOR PRE-TREATING SUBSTRATES FOR SUBSEQUENT FIXATION OF VAPOR PHASE CORROSION INHIBITORS
COMPOSITIONS ET PROCÉDÉS DE PRÉ-TRAITEMENT DE SUBSTRATS POUR LA FIXATION ULTÉRIEURE DES INHIBITEURS DE CORROSION EN PHASE VAPEUR

(30) Priorität: 04.01.2019 DE 102019100123
(43) Veröffentlichungstag der Anmeldung: 08.07.2020
(73) Patentinhaber: EXCOR Korrosionsforschung GmbH, 01067 Dresden (DE)
(72) Erfinder: REINHARD, Georg, 01099 Dresden (DE); NEITZEL, Peter, 01239 Dresden (DE); FAßBENDER, Frank, 01277 Dresden (DE); HAHN, Gerhard, 34346 Hann. Münden (DE)
(74) Vertreter: v. Bezold & Partner Patentanwälte - PartG mbB

(56) Entgegenhaltungen:
- CN-A- 106 223 118
- DE-B4- 10 241 040
- GB-A- 646 662
- US-A- 2 739 871

## Beschreibung

Die vorliegende Erfindung betrifft Stoffkombinationen aus wässrigen Chitosan-Harnstoff-Lösungen und deren Verwendung für die anwendungsspezifische Vorbehandlung flächiger Substrate, um anschließend auf dem getrockneten, fest haftenden Überzug des betreffenden Substrats übliche Dampfphasen-Korrosionsinhibitoren (vapour phase corrosion inhibitors, VpCI, volatile corrosion inhibitors, VCI) durch Beschichtung zu fixieren und damit besonders leistungsfähige Emittenten der betreffenden Dampfphasen-Korrosionsinhibitoren in Verpackungen oder bei der Lagerung in geschlossenen Räumen zum Schutz von üblichen Gebrauchsmetallen gegen Korrosion in Feuchtluft-Klimata bereitzustellen.

### Hintergrund der Erfindung

Bereits seit mehreren Jahrzehnten werden als Korrosionsinhibitoren identifizierte Verbindungen, die zudem schon unter Normalbedingungen zur Verdampfung oder Sublimation neigen und dadurch über die Gasphase an zu schützende Metalloberflächen gelangen können, zum temporären Korrosionsschutz von Metallgegenständen innerhalb von geschlossenen Räumen, z.B. in Verpackungen, Schaltschränken oder Schaukästen zum Einsatz gebracht. Metallteile auf diese Weise während der Lagerung und Transporten vor Korrosion zu schützen, ist die saubere Alternative zum temporären Korrosionsschutz mit Ölen, Fetten oder Wachsen.

Alle Maßnahmen des temporären Korrosionsschutzes von Metallen gegen die Einwirkung luftgesättigter wässriger Medien oder kondensierter Wasserfilme haben bekanntlich das Ziel, die auf Gebrauchsmetallen nach erstem Kontakt mit der Atmosphäre stets vorhandene Primäroxidschicht (primary oxide layer, POL) vor chemischen und mechanischen Abbau zu konservieren (vgl. z.B.: E. Kunze (Hrsg.), Korrosion und Korrosionsschutz, Band 3, Wiley-VCH, Berlin, New York 2001, S. 1679-1714; S. Koehler, G. Reinhard, VCI containing package materials - mode of functioning, Int. J. Corros. Scale Inhib., 2014, 3, Nr. 4, S. 286-306).

Um das durch Anwendung von vorzugsweise über die Dampfphase wirkenden Korrosionsinhibitoren zu erreichen, ist allerdings zu berücksichtigen, dass die üblichen Gebrauchsmetalle und die auf ihren Oberflächen jeweils vorhandene POL unterschiedliche chemische Eigenschaften aufweisen. Daher sind Dampfphasen-Korrosionsinhibitoren grundsätzlich nach der Art des zu schützenden Metalls auszuwählen (vgl. z.B.: US 4,374,174, US 6,464,899, US 6,752,934 B2, US 7,824,482 B2 und US 8,906,267 B2).

Für Gegenstände und Konstruktionen, die aus unterschiedlichen Metallen gefertigt wurden und dazu ggf. noch in verschiedenartigen Bearbeitungszuständen (rau, geschliffen, poliert etc.) vorliegen, bedarf es folglich geeigneter Kombinationen verschiedener Korrosionsinhibitoren, um für die betreffenden Metalle und Oberflächenzustände innerhalb ein und desselben Behältnisses oder einer gemeinsamen Verpackung jeweils einen zuverlässigen temporären Korrosionsschutz zu gewährleisten. Da solche Mischmetall-Gegenstände und - Bauteile heute technisch am häufigsten vertreten sind, hat die Bereitstellung von Produkten für ihre temporäre Konservierung eine immer noch zunehmende Bedeutung. Das betrifft vor allem Produkte, die mit einer Kombination an flüchtigen Korrosionsinhibitoren (VpCI/VCI) ausgerüstet sind, jeweils abgestimmt auf die unterschiedliche Sensibilität der zu schützenden Metalle und Oberflächenzustände in Luft unterschiedlicher rel. Feuchte und Zusammensetzung.

Für den temporären Korrosionsschutz von Metallteilen während des Transports und der Lagerung innerhalb geschlossener Verpackungen werden heute hauptsächlich mit einer pulverförmigen oder granulierten VpCI/VCI-Kombination befüllte Emitter (Beutel oder Kapseln), Papier-, Pappe- oder Kunststoffsubstrate, die mit einer VpCI/VCI-Kombination beschichtet sind, sowie flächige Kunststoff-Produkte (z.B. Folien, Behältnisse, Boxen, Tray's), in deren Wandungen eine VpCI/VCI-Kombination durch Extrusion oder Spritzguss eingearbeitet wurde, zur Anwendung gebracht.

Beispielhaft genannt seien dafür die Patente US 3.836.077, US 3.967.926, US 4.124.549, US 4.290.912, US 5.209.869, US 5.332.525, US 5.393.457, US 6.752.934 B2, US 7.824.482, US 8,906,267 B2, US 4.124.549, EP 0.639.657 und EP 1.219.727, in denen solche Verpackungsmittel mit unterschiedlichen Kombinationen an VpCI/VCI beschrieben sind.

Erfahrungsgemäß erweist es sich aber immer wieder als problematisch, Produkte bereitzustellen, aus denen die betreffenden VpCI/VCI-Komponenten im für einen zuverlässigen temporären Korrosionsschutz erforderlichen Ausmaß verdampfen bzw. sublimieren.

Um eine solche Anwendung erfolgreich zu gestalten, ist stets zu berücksichtigen, dass der Verpackungsprozess für metallische Bauteile gewöhnlich an Luft unterschiedlicher rel. Luftfeuchtigkeit und Zusammensetzung stattfindet, sodass die betreffenden Behältnisse und Verpackungen nach ihrem Verschließen folglich auch die entsprechende wasserdampfhaltige Luft enthalten. Es genügt daher nicht, ein Verpackungsmittel zum Einsatz zu bringen, das eine auf die Art und die Oberflächenzustände der zu schützenden Metalle abgestimmten VpCI/VCI- Kombination enthält. Abhängig von der spezifischen Zusammensetzung der Atmosphäre innerhalb einer Verpackung und der Temperatur sind weitere Maßnahmen zu realisieren, mit denen gewährleistet wird, dass die Wirkstoffe relativ schnell und in ausreichend hoher Konzentration aus dem jeweiligen VpCI/VCI-Depot durch Verdampfung und/oder Sublimation freigesetzt werden, durch Diffusion und Konvektion innerhalb der geschlossenen Verpackung zu den zu schützenden Metalloberflächen gelangen und dort einen Adsorptionsfilm ausbilden, noch bevor an gleicher Stelle Wasser aus der in der Verpackung vorliegenden Feuchtluft kondensieren kann bzw. weitere korrosive Bestandteile, die in der Atmosphäre des Innenraums der Verpackungen vorhanden sind, allein oder gemeinsam mit dem kondensierten Wasser Korrosionsvorgänge bedingen.

Die als sog. Aufbauphase (conditioning or incubation time) bezeichnete Zeit, während der sich nach dem Verschließen des Behältnisses/der Verpackung die Bedingungen für den VCI-Korrosionsschutz einstellen, ist naturgemäß von der Korrosionsanfälligkeit der jeweils zu schützenden Metallteile abhängig. Diese wird wiederum hauptsächlich von der Oberflächenbeschaffenheit dominiert. Daher genügt es nicht, lediglich eine auf die Art der zu schützenden Metalle abgestimmte Kombination von VpCI/VCI-Komponenten einzusetzen, sondern sie immer auch so zu applizieren, dass die zur Entfaltung ihrer Wirkung erforderliche sog. Aufbauphase den betreffenden Anforderungen angepasst ist. Bleibt das unberücksichtigt, dann besteht die Gefahr, dass der Korrosionsprozess schon gestartet wird, bevor die VCI-Moleküle in die Nähe der Metalloberfläche gelangt sind.

Um für eine ausgewählte Kombination von VpCI/VCI-Komponenten in einer vorgegebenen Verpackung die Aufbauphase den jeweiligen technischen Erfordernissen anzupassen, ist zu berücksichtigen, dass praktisch alle technisch verfügbaren VpCI/VCI-Depots, wie etwa die befüllten Emitter oder die VpCI/VCI-Verpackungsmittel, die gleichzeitig als Trägermatrix für die betreffenden Wirkstoffe genutzt werden, wie das z.B. bei den üblichen VpCI/VCI-Papieren und den VpCI/VCI-haltigen Polyolefin (PO)-Produkten der Fall ist, **funktionsorientierte Gradientenwerkstoffe (functionally graded materials, FGMs)** darstellen. Zu den FGMs werden bekanntlich alle Materialien gezählt, deren Zusammensetzung und Struktur sich über dem Volumen graduell verändert und gerade erst dadurch eine geforderte Funktion bedingt (vgl. z.B.: R.M. Mahamood, E. Titilayo Akinlabi, Functionally Graded Materials, Topics in Mining, Metallurgy and Materials Engineering, Springer Int. Publishing AG 2017, Ch. 2, p. 9 -21; Huang HongJun, Wan HongJing, Li ZhiGuang, Zhang Min, Fabrication of the Volatile Corrosion Film with FGMs Structure, Materials Science Forum Vols. 423-425 (2003) pp. 591-592).

Bei den VpCI/VCI-Depots besteht diese geforderte Funktion vor allem in der Emission der VpCI/VCI-Komponenten aus dem betreffenden Depot, wobei dieser Prozess in mehrere Teilschritte zerlegt werden kann, wie:
(1) der Migration der VpCI/VCI-Teilchen aus dem Inneren des Depots (z.B. Pulvermischung eines Emitters, Beschichtung eines Papiers oder dem Inneren einer die VpCI/VCI-Komponenten enthaltenden Folie) an die Phasengrenze zum Innenraum der Verpackung,
(2) ihrer Adsorption an dieser Phasengrenze und
(3) ihrer Desorption von der Phasengrenze mit nachfolgender Sublimation in den Innenraum der Verpackung.

Erst für den Schritt (3) haben die betreffenden Wirkstoffe einen ausreichend hohen Sublimationsdruck mitzubringen. Schritt (2) hängt hauptsächlich von den Wechselwirkungen ab, die die stets polaren VpCI/VCI-Partikel mit dem Beutelmaterial eines Emitters, der Matrix der Beschichtung eines VpCI/VCI-Papiers bzw. dem für eine VpCI/VCI-Folie ausgewählten Polyolefin und dessen involvierten Verarbeitungshilfsmitteln eingehen. Im Interesse eines effektiven VCI-Korrosionsschutzes ist zu verhindern, dass diese Wechselwirkungen energieintensiver sind, was z.B. der Fall sein kann, wenn diese Trägermaterialien selbst polare Anteile haben oder weitere polare Bestandteile enthalten.

Für den Schritt (1), die regelmäßige Nachlieferung von VpCI/VCI-Teilchen aus dem Inneren des Depots Emitter, Beschichtung oder Polymermatrix an die Phasengrenze durch Migration ist in erster Linie der **Konzentrationsgradient** dieser Teilchen über dem betreffenden Depot verantwortlich. Dieser entwickelt sich erst nach Sublimation der im Ausgangszustand eines VpCI/VCI-Depots unmittelbar an der Phasengrenze vorhandenen VpCI/VCI-Partikel und kann dann umso größer werden, je höher die Konzentration dieser Wirkstoffe innerhalb des Emitters oder Trägermaterials vorgegeben wurde.

Auf Basis der Betrachtung der VpCI/VCI emittierenden Verpackungsmittel als FGMs folgt demnach, dass die als Träger dieser Wirkstoffe zum Einsatz gelangenden Beschichtungen und Polymere die Eigenschaft mitzubringen haben, möglichst große Anteile an mikronisierten Feststoffen, wie sie die VpCI/VCI-Partikel darstellen, aufzunehmen und schon bei Raumtemperatur etwa durch Platzwechselvorgänge wandern (migrieren) zu lassen, sobald sich durch Sublimation der VpCI/VCI-Partikel, die sich bereits im Ausgangszustand im Phasengrenzbereich befinden, ein Konzentrationsgradient als Triebkraft der Migration innerhalb des betreffenden Depots aufgebaut hat.

Gemäß der für die Migration geltenden physikalisch-chemischen Gesetzmäßigkeiten (vgl. z.B.: P.W. Atkins, Physical Chemistry, 5th Ed., Oxford Univ. Press, Oxford, Melbourne, Tokyo 1994, p. 846-852) sollten die VpCI/VCI-Partikel dabei innerhalb der Wirkstoffmischung einzeln, also mit möglichst kleinem Radius r vorliegen, denn als Partikel-Agglomerate mit größerem r würden sie bei weitem langsamer migrieren. VpCI/VCI-Systeme müssen zudem perfekt vermischt vorliegen, damit aus dem Depot zu jedem Zeitpunkt immer alle das System und damit den Wirkmechanismus realisierenden Komponenten migrieren und emittiert werden - bis zur Einstellung des Sublimationsgleichgewichts innerhalb der betreffenden Verpackung.

Schon unter Normalbedingungen zur Sublimation neigende Feststoffe stellen ihr Verdampfungsgleichgewicht mit der Gasphase bekanntlich umso leichter ein, je größer ihre spezifische Oberfläche ist. Solche Korrosionsinhibitoren in Pulverform mit möglichst kleiner Partikelgröße vorzulegen, kann daher als Grundvoraussetzung für die Einstellung einer möglichst kurzen Aufbauphase angesehen werden. VpCI/VCI in Form feindisperser Pulver, abgepackt in Beuteln aus einem Material, welches für die dampfförmigen Wirkstoffe durchlässig ist (z.B. Papierbeutel, poröse Polymerfolie, perforierte Kapsel), sind dafür seit langem handelsüblich. Sie innerhalb einer geschlossenen Verpackung neben den zu schützenden Metallteilen zu exponieren, ist die einfachste Form der praktischen Anwendung von VpCI/VCI (vgl. z.B.: E. Vuorinen, E. Kalman, W. Focke, Introduction to vapour phase corrosion inhibitors in metal packaging, Surface Engng. 29(2004) 281 pp., US 4,973,448, US 5,393,457, US 6,752,934 B2, US 8,906,267 B2, US 9,435,037 und EP 1 219 727 A2). Die damit erreichbaren Aufbauphasen können außerdem leicht durch die Permeabilität der Wandungen solcher Depots reguliert werden. Sollen dabei Mischungen verschiedener Korrosionsinhibitoren zum Einsatz kommen, dann ist zusätzlich zu gewährleisten, dass sie untereinander weder chemisch reagieren, noch zur Bildung von Agglomeraten führen, da dadurch sowohl ihre gemeinsame Emission aus dem Depot als auch ihre geforderte Chemisorption an den zu schützenden Metalloberflächen verhindert bzw. zumindest stärker beeinträchtigt würde.

Trotz der genannten Vorteile solcher VpCI/VCI-Emitter ist ihr technischer Einsatz begrenzt und insbesondere bei den heute üblichen automatischen Verpackungsprozessen wegen zusätzlicher, schwer automatisierbarer Manipulationen (z.B.: Platzierung der Emitter innerhalb der Verpackungen oder ihre Entnahme und gesonderte Sammlung nach Ende von Transporten) unattraktiv.

Die Einarbeitung von VpCI/VCI in polymere Trägermaterialien, bevorzugt in Polyolefine (PO), wie Polyethylen (PE) oder Polypropylen (PP), und die Bereitstellung VpCI/VCI emittierender Folien und weiterer PO-Produkte (Boxen, Trays, etc.), wie sie z. B. vorgeschlagen wird in US 4,124,549, US 4.290.912, US 5,139,700, US 6,464,899 B1, US 6.752.934 B2, US 6,787,065 B1, US 7,261,839 B2, US 7.824.482, US 8,283,024 B2, EP 1 218 567 B1 und EP 1 641960 B1, wird heute erfahrungsgemäß in besonders hohem Ausmaß praktiziert, gerade weil sich diese Produkte zur Automatisierung von Verpackungsprozessen vorteilhaft applizieren lassen. Allerdings haben diese polymerbasierten VpCI/VCI-Produkte im Regelfall den Nachteil, dass die im Rahmen der Extrusion über die Polymerschmelze eingearbeiteten VpCI/VCI innerhalb der Polymermatrix im Unterschied zu den oben beschriebenen VpCI/VCI- Depots mit Pulver-oder Granulatfüllungen relativ fest eingeschlossen vorliegen und ihre Emission daraus nur vergleichsweise erschwert möglich ist. In VpCI/VCI-Folien, die heute üblicherweise mit Schichtdicken d im Bereich 30 µm ≤ d ≤ 120 µm zur Anwendung gelangen, können zudem erfahrungsgemäß bei weitem nicht so hohe spezifische Wirkstoffkonzentrationen wie etwa in den VpCI/VCI-Emittern untergebracht werden. Außerdem kommt es gewöhnlich während der Extrusion der betreffenden Masterbatches und Folien infolge der dabei auftretenden thermischen Belastungen zu schwer kontrollierbaren Verlusten an VpCI/VCI- Komponenten. Eine Reihe bekannter und bewährter VpCI/VCI-Komponenten können gar nicht zur Einarbeitung in Polymere gelangen, da sie den dabei auftretenden thermischen Belastungen nicht widerstehen würden.

Erfahrungsgemäß konnten daher mit keiner der bisher bekanntgewordenen VpCI/VCI-Stoffkombinationen Folien bereitgestellt werden, die für den VCI-Korrosionsschutz von überdurchschnittlich korrosionsanfälligen Metalloberflächen geeignet sind, schon weil es aus den besagten Gründen nicht gelang, Bedingungen einzustellen, unter denen die ausgewählten Wirkstoffe innerhalb der VpCI/VCI-Folie einen ausreichend hohen Konzentrationsgradienten entwickeln, wie er für die Realisierung einer relativ kurzen Aufbauphase erforderlich ist. Die heute handelsüblichen VpCI/VCI-Folien sind daher bislang vor allem als technologisch leicht zu applizierende Massenartikel in Gebrauch, ohne höheren Anforderungen an ihre VCI-Korrosionsschutzeigenschaften genügen zu können.

Um diese Situation zu verbessern und Verpackungen mit Polymerfolien hinsichtlich des eingebrachten VpCI/VCI-Systems leistungsfähiger zu profilieren, sind mehrere Vorschläge bekannt geworden. Als naheliegend erscheinen dabei alle Maßnahmen, die Emission der in Polymerfolien integrierten VpCI/VCI- Komponenten nur in eine Richtung zu ermöglichen, orientiert auf das zu schützende Metallteil in der Verpackung, und die Gegenseite dafür als Barriere auszustatten. So wurde versucht, die das VpCI/VCI-System enthaltende Folie auf einer Seite mit einem dünnen Metallfilm zu laminieren oder mit einer dünnen Schicht eines nicht mit dem Trägerpolymer der Wirkstoffe identischen Polymerblends auszurüsten (vgl. z.B.: US 5,393,457, US 5,139,700, EP 0662527 A1, US 6,183,825 B1, US 6,224,957 B1, US 6,488,998 B1, US 6,773,774 B1, US 8,283,024 B2, US 8,920,714 B2, US 2010/008097 A1 oder DE 10 2011 054 619 A1). Bisher konnte jedoch erfahrungsgemäß weder durch Anwendung einer äußeren Sperrschichtfolie noch durch die Ausstattung der Außenseite einer durch Coextrusion hergestellten VpCI/VCI-haltigen Folie als Diffusionsbarriere eine Beschleunigung der Emission der betreffenden VpCI/VCI-Komponenten in den Innenraum der geschlossenen Verpackung erreicht werden. Zudem verhinderten die wesentlich höheren Herstellungskosten solcher VpCI/VCI-haltigen Folien und die schwierigen Bedingungen ihres Recyclings wegen der Metallschicht oder der verschiedenartigen Polymere (z.B.: PE, PA, PET, TPE, TPU) bislang eine breitere wirtschaftliche Nutzung.

Vor diesem Hintergrund wurden weitere Maßnahmen in Vorschlag gebracht, um für das jeweils integrierte VpCI/VCI-System in einer Verpackungsfolie die sog. Aufbauphase so zu verkürzen, dass verbesserte VCI-Korrosionsschutzeigenschaften resultieren. Ein Weg in dieser Richtung ist z.B. die Beschichtung der Innenseite einer Polymerfolie mit einem die VpCI/VCI-Komponenten enthaltenden Gel, fixiert unter einer gasdurchlässigen Innenfolie aus Tyvek^{®} 1059 (DuPont) (vgl. US 7,763,213 B2). Dadurch soll es möglich sein, wesentlich höhere Mengenanteile der VpCI/VCI-Komponenten vorzugeben, als es durch direkte Integration in eine Polyolefinfolie mittels Extrusion gelingt und damit letztlich Bedingungen einzustellen, unter denen sich für die betreffenden VpCI/VCI-Komponenten ein deutlich größerer Konzentrationsgradient entwickelt könnte, sofern die Eigenschaften der Innenfolie aus Tyvek^{®} 1059 eine entsprechend höhere Emissionsrate der Wirkstoffe erlauben.

Ein weiterer etwa gleichartiger Weg besteht im Eintrag einzelner oder mehrerer VpCI/VCI-Komponenten mit relativ hohen Mengenanteilen in einen geeigneten Kleber, um anschließend damit die Innenseite von Polymerfolien anforderungsgemäß zu beschichten (vgl. z. B.: EP 0 825 019 A2, EP 2 184 162 B1, EP 2 347 897 A1, EP 2 730 696 A1, DE 10 2012 000 255 A1, US 8,637,139 B2, US 2015/0018461 oder WO2016/037682 A1). Das erfordert allerdings einen Klebstoff, der mit den eingebrachten VpCI/VCI-Komponenten kompatibel ist und als hinreichend poröse Schicht aushärtet, damit höhere Emissionsraten dieser Komponenten erreicht werden, als aus Folien, in die die VpCI/VCI-Komponenten während der Extrusion integriert wurden. Die bisher vorzugsweise zum Einsatz gelangten Einkomponenten-Reaktionsklebstoffe haben aber erfahrungsgemäß den entscheidenden Nachteil, dass sie gerade mit den meisten heute üblichen VpCI/VCI-Komponenten aus den Gruppen der aromatischen und aliphatischen Amine, Aminoalkohole und Amincarboxylate chemisch reagieren und daher nicht zur Anwendung gelangen können.

Um trotzdem ein Verpackungsmaterial bereitzustellen, das größere Anteile an VpCI/VCI-Komponenten enthält, als sie durch Extrusion in Folien untergebracht werden können, und dadurch für besonders korrosionsanfällige Metallgegenstände zum Einsatz gelangen kann, wird in der EP 2 752 290 A1 vorgeschlagen, es in drei Schichten aufzubauen, einer äußeren Folie aus einem Kunststoff, der für die Migration der VpCI/VCI-Komponenten als Barriere fungiert, einer als Reservoirschicht bezeichneten Schicht aus einem geschäumten Kunststoff, der die betreffenden VpCI/VCI-Komponenten in besonders hohen spezifischen Konzentrationen enthält, und einer innenseitig laminierten Folie als sog. Transferschicht, deren Durchlässigkeit für die Wirkstoffe ggf. noch mit geeigneten Füllstoffen verbessert wurde.

Die Herstellung solcher aus verschiedenen Materialien in mehreren Lagen aufzubauenden Verpackungsmittel bedarf allerdings erfahrungsgemäß immer eines höheren verfahrenstechnischen Aufwands und ist daher für den Allgemeingebrauch zu kostenintensiv. Zudem ist, wie teilweise schon hervorgehoben, die Auswahl des als Reservoir der VpCI/VCI-Komponenten dienenden Trägermaterials (Gel, Klebstoff, Kunststoffschaum etc.) nach wie vor problembehaftet, da die Migration der involvierten Wirkstoffe innerhalb solcher Medien naturgemäß stark eingeschränkt ist und sich schon dadurch das betreffende Reservoir nicht als leistungsfähiges FGM profilieren kann.

Als festgestellt wurde, dass sich die üblichen VpCI/VCI-Komponenten in relativ hohen Mengenanteilen gerade in polare Kunststoffe, wie die Polyurethane, Polystyrole, Styrolblock-copolymere, Acrylnitril-Butadien-Styrol (ABS), Silikone, Fluorsilikone, EthylenVinylacetat (EVA) oder Polysulfide durch Extrusion oder Spritzguss (Injection moulding) einarbeiten lassen, erschien es offensichtlich verlockend, auf diese Weise leistungsfähige VpCI/VCI emittierende Verpackungsmittel bereitzustellen (vgl. z.B.: US 6,464,899, US 6,054,5132, US 6,464,899 B1, US 7,261,839 B2, US 8,283,024 B2 oder EP 1 641960 B1). Zudem wurde versucht, VpCI/VCI-Komponenten während des Schäumens von polymeren Feststoffen einzuarbeiten (vgl. z.B. JP 58.063.732, US 4.275.835, US 6,054,512, US 8,920,714 B2 und DD 295.668), vorzugsweise, um mit VpCI/VCI gefüllten PUR-Schaum herzustellen. Nach den vorliegenden Erfahrungen bleiben allerdings die Emissionsraten der VpCI/VCI aus diesen Kunststoffen gewöhnlich weit unter den Anforderungen zurück, offensichtlich wegen intensiverer Wechselwirkungen der ebenfalls polaren VpCI/VCI-Komponenten innerhalb dieser polaren Trägermaterialien. Daher konnten sich auch Verpackungsmittel mit einer eingearbeiteten Lage Kunststoffschaum als Reservoir der VpCI/VCI-Komponenten bisher nicht einmal für spezifische Anwendungen in der Uhren- oder Mikroelektronikbranche durchsetzen, wie das z.B. in der US 6,054,512 angestrebt war.

Inwieweit diese Situation verbessert werden kann, wenn anstelle der erwähnten, synthetisch hergestellten Kunststoffe Biopolymere als Träger der VpCI/VCI-Komponenten zur Anwendung gelangen, wie das z.B. in US 7,261,839 B2, US 7,270,775 B2, US 7,297,191 B1, US 8,795,589 B1, EP 0 990 676 B1 oder EP 1 641 960 B1 vorgeschlagen wird, lässt sich noch nicht zuverlässig einschätzen, da nach eigenen Recherchen solche Produkte zumindest in Europa noch nicht marktüblich sind. Wenn aber für die Bereitstellung von VpCI/VCI emittierenden Folien und Behältern, die biologisch abbaubar sein sollen, beispielsweise empfohlen wird, die Wirkstoffe zunächst als Konzentrat in einen biologisch abbaubaren Polyester aus der Gruppe der ε-Caprolactone, der Poly(hydroxybutyrat-co-valerate)(PHBV) mit 8, 16 oder 24 % Valerat, der nicht beschichteten oder mit Nitrocellulose beschichteten Cellophane bzw. der mit Epichlorhydrin quervernetzten Chitosane einzuarbeiten und diese Konzentrate danach für die Herstellung von Folien und Behältern mit jeweils den gleichen biologisch abbaubaren Polyestern zu verdünnen (vgl. z.B.: US 7,261,839 B2, US 7,270,775 B2 oder EP 1 641 960 B1), so kann erfahrungsgemäß wieder unterstellt werden, dass durch die Einarbeitung polarer VpCI/VCI-Komponenten in ein polares polymeres Trägermaterial infolge intensiverer Wechselwirkungen keine hohen Emissionsraten der betreffenden VpCI/VCI-Komponenten und damit keine leistungsfähigen FGMs zu erwarten sind.

Um auf technologisch unkomplizierten Wegen Verpackungsmittel bereitzustellen, die beliebige VpCI/VCI-Komponenten in relativ hohen spezifischen Konzentrationen enthalten und auf der Basis des FGM-Konzepts in einem Ausmaß emittieren, dass die für einen zuverlässigen VCI-Korrosionsschutz erforderlichen relativ kurzen Aufbauphasen resultieren, erscheint die Ausstattung der betreffenden Verpackungsmittel mit einer geeigneten Wirkstoff-haltigen Beschichtung nach wie vor am zweckmäßigsten zu sein.

Prinzipiell bedarf es dafür lediglich eines Beschichtungsmittels, das die gewünschten VpCI/VCI-Komponenten in relativ hohen Konzentrationen enthält, das ausgewählte Trägermaterial gut benetzt, so dass damit ausreichend hohe Mengenanteile eines Nass-Films abgeschieden werden können, nach dessen Trocknung die betreffenden VpCI/VCI-Komponenten mikronisiert und in relativ hohen spezifischen Konzentrationen auf der Oberfläche des Trägermaterials verbleiben.

Für die technische Anwendung von auf diese Weise mit VpCI/VCI ausgerüsteten Verpackungsmitteln ist allerdings auch zu gewährleisten, dass die Wirkstoffe zumindest insoweit stabil auf dem Trägermaterial fixiert vorliegen, dass sie nicht schon mechanisch während des üblichen Handlings unkontrolliert verlustig gehen. Andererseits darf diese Fixierung der VpCI/VCI-Wirkstoffe an den Oberflächen des Trägermaterials auch nicht so intensiv sein, dass sie zur Beeinträchtigung ihrer Emission in die benachbarte Gasphase führt, denn das hätte bekanntermaßen einen verminderten VCI-Korrosionsschutz zur Folge.

Da die meisten heute bekannten VpCI/VCI-Komponenten in Wasser oder Alkohol-Wasser-Mischungen ausreichend löslich sind, kommen solche Lösungen von VpCI/VCI-Komponenten schon seit langem zum Einsatz, um Papiere und Pappen als flächige Verpackungsmittel mit VpCI/VCI-Komponenten auszurüsten (vgl. z.B. JP 61.227.188, JP 62.063.686, JP 63.028.888, JP 63.183.182, JP 63.210.285, US 919,778, US 2,534,201, US 2,986,447, US 3.887.481, US 7,824,482 B2, US 8,906,267 B2, DD 298 662, DE 1521900 und DE 10 2017 122 483.1, sowie US 2,739,871).

Bei der Beschichtung solcher Substrate und mehr noch bei der Beschichtung interessierender Kunststoffoberflächen mit wässrigen, wässrig-organischen oder organischen Lösungen der VpCI/VCI-Komponenten erweist sich allerdings bis in die Gegenwart die dimensions- und mengenstabile Fixierung der Wirkstoffe auf dem betreffenden Substrat als problematisch. Liegen diese doch nach dem Verdampfen des jeweiligen Lösungsmittels gewöhnlich nur als amorphe Partikelagglomerate oder Mikrokristallite auf dem Substrat vor. Und nur wenn letzteres über eine ausreichende Rauheit oder Strukturporigkeit verfügt, können solche feinpulvrigen Feststoffe zumindest teilweise auch innerhalb von Poren und ähnlichen Hohlräumen abgelagert werden. Abhängig von der Oberflächenbeschaffenheit der Substrate besteht daher gewöhnlich schon beim einfachen Handling die Gefahr des mechanischen Abspreitens und Herausrieselns dieser Wirkstoffe von der Oberfläche des beschichteten Verpackungsmittels, so dass nicht zuverlässig abgesichert werden kann, dass die so vorbehandelten Papiere, Pappen oder Innenflächen von Kunststoffbehältern zum Zeitpunkt ihrer Anwendung für den Korrosionsschutz überhaupt noch die erforderlichen spezifischen Oberflächenkonzentrationen an VpCI/VCI besitzen.

Um diesen Nachteil zumindest in seinem Ausmaß zu begrenzen, wird in DE 9210805 vorgeschlagen, zunächst eine Seite einer Wellpappe durch Tränken mit der wirkstoffhaltigen wässrigen Lösung als Träger und Depot der VpCI/VCI auszurüsten und nach dem Trocknen noch mit einer dünnen, porösen Lage Papier zu überdecken, um abzusichern, dass die Wirkstoffe bis zur bestimmungsgemäßen Anwendung der betreffenden Wellpappe auf deren Oberfläche gehalten werden. Bei dieser Art der Fixierung der VpCI/VCI ist deren Emission in den Innenraum einer damit hergestellten Kartonage aber vor allem vom Konzentrationsgradienten der Wirkstoffe innerhalb der Papierlage und nicht mehr von ihren Mengenanteilen und Partikelgrößen im Depot abhängig.

Als Alternative zur Beseitigung dieser Nachteile wird in der US 5,958,115 ein korrosionsinhibierendes Kompositmaterial beschrieben, das aus einer Mischung eines Metalloxidsols, den sublimationsfähigen Korrosionsinhibitoren und weiteren Additiven besteht und auf Substraten, wie Papier, Pappe oder PUR-Schaumstoff einen relativ festhaftenden, hinreichend porösen Gelfilm der verwendeten Metalloxide und Additive bildet, in dem die VpCI/VCI-Komponenten in vergleichsweise hohen Mengenanteilen und während üblicher mechanischer Beanspruchungen stabil fixiert sind und daraus mit einer gleichmäßigen, langandauernden Emissionsrate abgegeben werden. Dieser Weg der anwendungsbereiten Fixierung von VpCI/VCI-Komponenten auf flächigen Substraten konnte allerdings bisher erfahrungsgemäß noch nicht wirtschaftlich akzeptabel gestaltet werden, hauptsächlich weil der Solzustand dieser Kompositmaterialien nur in Wasser-Alkohol-Mischungen mit > 70 % Alkohol (bevorzugt Ethanol) über mehrere Stunden zur Verarbeitung erhalten bleibt. Für die Beschichtung von Substraten mit solchen gefüllten Solen im technischen Maßstab bedarf es naturgemäß zudem beigeordneter Anlagen zur Rückgewinnung oder katalytischen Nachverbrennung des Alkohols, was wieder mit einem höheren Kostenaufwand verbunden ist.

Dispergiert man die VpCI/VCI-Komponenten in einem organischen Filmbildner, wie Polyacrylat, Alkyd-, Epoxid- oder Phenolharz und beschichtet damit ein flächiges Trägermaterial, wie das z.B. in JP 61.227.188, JP 62.063.686, JP 63.028.888, JP 63.183.182, JP 63.210.285, DD 298 662, US 5,958,115, US 8,795,589 B1, US 9,518,328 B1 und EP 0 990 676 B1 beschrieben wird, dann erhält man zwar erfahrungsgemäß in jedem Fall ein Verpackungsmittel, auf dessen Oberflächen die betreffenden Wirkstoffe in relativ hohen spezifischen Konzentrationen vorhanden sind, doch hängt ihre Emissionsrate hauptsächlich von den Eigenschaften der ausgehärteten polymeren Filmbildner ab. Erfahrungsgemäß können durch solche VpCI/VCI-Beschichtungen weder Papier- noch Kunststoff-Substrate als leistungsfähige FGMs profiliert werden, weil die Migrationsgeschwindigkeit der VpCI/VCI-Partikel innerhalb des ausgehärteten Filmbildners selbst bei Einarbeitung überdurchschnittlich hoher Wirkstoffvolumenkonzentrationen und Anwendung migrationsfördernder Adjuvanzien stets viel zu niedrig bleibt.

Die britische Patentanmeldung GB 646 662 A1 beschreibt einen Ansatz, bei dem zur Beschichtung von Kunststoffoberflächen die VpCI/VCI-Komponenten in Form einer reaktiven Salzmischung zunächst in Wachsemulsionen oder in einen anderen geeigneten Binder eingetragen und damit das betreffende Trägermaterial anschließend beschichtet wird.

Die Aufgabe der Erfindung ist es, einen effektiveren und technisch leicht realisierbaren Weg zu erschließen, durch den gerade mittels wässriger VpCI/VCI-Beschichtungslösungen eine mechanisch und chemisch hinreichend stabile Fixierung üblicher VpCI/VCI-Komponenten auf Festkörperoberflächen mit relativ hohen spezifischen Konzentrationen erfolgt und dadurch gegenüber den oben aufgeführten Nachteilen herkömmlicher Verfahren zur Ausrüstung der breiten Palette der für Verpackungsmittel üblichen Substrate deutlich verbesserte Bedingungen für die Bereitstellung leistungsfähiger VpCI/VCI-Depots geschaffen werden.

Überraschend konnte diese Aufgabe erfindungsgemäß gelöst werden durch die Verwendung einer Stoffkombination, welche Harnstoff, mindestens ein Chitosan-Biopolymer mit einem Deacetylierungsgrad von 70% bis 95 % sowie mindestens eine Dicarbonsäure in wässriger Lösung umfasst, gemäß Anspruch 1 als Primer zur Vorbehandlung der Oberflächen von Substraten, insbesondere nichtmetallischen Substraten, die als Trägermaterialien für Dampfphasen-Korrosionsinhibitoren vorgesehen sind, um die nachfolgende Fixierung von Dampfphasen-Korrosionsinhibitoren aus einer diese Wirkstoffe enthaltenden wässrigen oder wässrig alkoholischen Lösung auf diesen Substratoberflächen zu fördern oder zu ermöglichen.

Verwandte Aspekte und speziellere Ausführungsformen der Erfindung sind Gegenstand der weiteren Ansprüche.

### Beschreibung der Erfindung

Die erfindungsgemäß verwendete Stoffkombination umfasst Harnstoff, mindestens ein Chitosan-Biopolymer mit einem Deacetylierungsgrad von 70% bis 95 % sowie mindestens eine Dicarbonsäure in wässriger Lösung.

Die Mengenanteile der verschiedenen Komponenten können je nach dem speziellen Anwendungsgebiet variieren und geeignete Zusammensetzungen können unschwer von einem Fachmann auf diesem Gebiet durch Routineversuche festgestellt werden.

In einer bevorzugten Ausführungsform der erfindungsgemäß verwendeten Stoffkombination liegt das Chitosan als Komponente (1) mit einem Anteil von 0,1 bis 2 Gewichts-%, Harnstoff als Komponente (2) mit 10 bis 25 Gewichts-% und eine Dicarbonsäure als Komponente (3) mit einem Anteil von 0,5 bis 2,5 Gewichts-% in Wasser, vorzugsweise entionisiertem Wasser, vollständig gelöst vor.

"Entionisiertes Wasser", wie hier verwendet, kann prinzipiell durch jedes bekannte Verfahren zur Entsalzung/Demineralisation, insbesondere lonenaustausch, Membranfiltration oder Destillation, hergestellt werden und ist im Handel erhältlich.

Bei der Herstellung solcher homogenisierten Lösungen dient die Harnstoff-Komponente als Adjuvans, indem sie die Dispergierung der handelsüblichen Chitosane mit einem Deacetylierungsgrad von 70% bis 95 % im vorgelegten Wasser, abhängig von ihrer unterschiedlichen mittleren Molmasse, vorteilhaft unterstützt und damit deren Auflösung durch protolytische Reaktionen mit der jeweiligen Dicarbonsäure erleichtert.

Die wasserlösliche Dicarbonsäure ist aus der Gruppe der aliphatischen gesättigten Dicarbonsäuren ausgewählt und vorzugsweise aus der Gruppe, die Butandisäure (Bernsteinsäure), Pentandisäure (Glutarsäure), Hexandisäure (Adipinsäure), Heptandisäure (Pimelinsäure), 2-Aminobutandisäure (Asparaginsäure) oder 2-Aminopentandisäure (Glutaminsäure) und Mischungen davon umfasst.

In einer bevorzugten Ausführungsform umfasst die erfindungsgemäß verwendete Stoffkombination ferner noch Viskositätsregler, insbesondere Cellulose-basierte, nicht-ionische Verdickungsmittel.

Gegebenenfalls können 2 oder mehr Komponenten der erfindungsgemäß verwendeten Stoffkombination auch wenigstens teilweise in miteinander assoziierter Form oder in Form von Konjugaten in der Stoffkombination vorliegen.

Verfahrensbezogen kann die obige Aufgabe der Erfindung insbesondere dadurch gelöst werden, dass das für die Fixierung von VpCI/VCI-Komponenten vorgesehene Substrat zunächst mit der erfindungsgemäß verwendeten Stoffkombination, d.h. einer harnstoffhaltigen wässrigen Chitosan-Dicarbonsäure-Lösung, als Primer beschichtet und thermisch nachbehandelt wird, bevor die Beschichtung mit einer die üblichen VpCI/VCI-Wirkstoffe enthaltenden wässrigen oder wässrig-alkoholischen Lösung erfolgt.

Mit diesem erfindungsgemäßen Verfahren resultieren im Vergleich zu den analogen, aber nicht erfindungsgemäß vorbehandelten Substraten höhere spezifische Konzentrationen der betreffenden VpCI/VCI-Komponenten bzw. wird deren Fixierung überhaupt erst möglich, so dass die mit diesen Wirkstoffen erfindungsgemäß ausgerüsteten Substrate als leistungsfähige FGMs innerhalb von Verpackungs-, Lagerungs- und Transportvorgängen der üblichen Gebrauchsmetalle einen besonders zuverlässigen temporären Korrosionsschutz gewährleisten können.

Bekanntlich wird das Biopolymer Chitosan (Poly-D-Glucosamin) als Polyaminosaccharid aus dem Chitin (Poly (N-Acetyl-1,4-β-D-Glucopyranosamin) durch Deacetylierung hergestellt. Da dieser Vorgang gewöhnlich unvollständig bleibt, sind von Chitosan in Abhängigkeit von der mittleren Molmasse und dem Deacetylierungsgrad (DA) verschiedene Produkte handelsüblich, bei Raumtemperatur als feste Pulver vorliegend und in wässrigen Medien mit pH < 6 gut löslich, vgl. z.B.: V. Zargar, M. Asghari, A. Dashti, A Review on Chitin and Chitosan Polymers: Structure, Chemistry, Solubility, Derivatives, and Applications, Chem. Bio. Eng. 2(2015) p. 204-226; B. Bellich, I. D'Agostino, S. Semeraro, A. Gamini, A Review: "The Good, the Bad und the Ugly" of Chitosans, MDPI-Journal Mar. Drugs 2016, 14(5), 99, 32 p.. Wie aus den zitierten Review-Artikeln hervorgeht, wurden für die verschiedenen Chitosan-Produkte bereits zahlreiche Anwendungen erschlossen.

Die Patentschrift DE 10241040 B4 beschreibt die Herstellung neuer Werkstoffe, wobei außer Polysacchariden und Polyaminoglucose (insbesondere Chitosan) als Hauptkomponenten auch Harnstoff oder Dicarbonsäureester als eigenschaftsverbessernde Hilfskomponenten eingesetzt werden können. Korrosionsschutzeigenschaften dieser neuen Werkstoffe werden nicht offenbart und waren auch nicht angestrebt.

Auf dem Gebiet der Verpackungsmittel betreffen die Anwendungen hauptsächlich die Herstellung und Modifizierung von Papieren mit wässrigen Chitosanlösungen für den Zweck, sie als Verpackungsmittel für Lebensmittel zu profilieren.

Auf Grund der durch die Deacetylierung entstandenen freien Aminogruppen liegt das Chitosan in sauren Lösungen bevorzugt als Polykation hoher Ladungsdichte vor. Wird der pH-Wert solcher Lösungen z.B. durch Zusatz von Natronlauge in den alkalischen Bereich (pH ≥ 6,5) verschoben, dann kommt es relativ schnell zur Ausflockung des Chitosans. Dieser Sachverhalt wird beispielsweise genutzt, um ein Aramidpapier hoher Reibungsfestigkeit und geringer Wasseraufnahmefähigkeit bereitzustellen (vgl. EP 0 953 081 B1, DE 6 9804586 T2). Dafür werden Aramidfasern als Pulpe in einer essigsauren Chitosanlösung mit einem pH-Wert im Bereich 2,5 ≤ pH ≤ 4,5 dispergiert und das Chitosan anschließend durch Verschiebung des pH-Werts in den Bereich 6,5 ≤ pH ≤ 11 auf den dispergierten Aramidfasern ausgefällt. Die beschichteten Fasern werden danach mit 5 bis 95 % in die wässrige Papierbeschickung eingetragen, um anschließend auf dem üblichen Weg (Papiermachersieb, Wasserabtrennung, Trocknung) das jeweils interessierende Spezialpapier zu erhalten.

Auf analoge Weise lassen sich auch primäre und sekundäre Cellulosen mit Chitosan beschichten und zur Herstellung von vorzugsweise für Lebensmittelverpackungen geeignete Papiere verwenden (vgl. z.B.: Ji-Dong Xu, Ya-Shuai Niu, Pan-Pan Yue, Ya-Jie Hu, Jing Bian, Ming-Fei Li, Feng Peng, Run-Cang Sun, Composite Film Based on Pulping Industry Waste and Chitosan for Food Packaging, MDPI-Journal Materials 2018, 11, 2264, 11p.). Solche Papiere, wie auch die durch nachträgliche Beschichtung üblicher Papiere mit einer Chitosan-haltigen wässrigen Lösung modifizierten Papiere sind nicht nur durch höhere Festigkeiten, sondern auch durch ein sehr niedriges Wasseraufnahmevermögen (niedriger COBB-Index nach DIN EN 20535) sowie stark reduzierte Luft- und Wasserdampfdurchlässigkeiten (Air permeation nach ISO 5636-3, Water vapour transmission rate, WVTR nach DIN 53122-1) gekennzeichnet (vgl.: z.B.: S. Kopacic, A. Walzl, A. Zankel, E. Leitner, W. Bauer, Alginate and Chitosan as a Functional Barrier for Paper-Based Packaging Materials, MDPI-Journal Coatings 2018, 8, 235, 15 p.).

Die chinesische Patentanmeldung CN 106223118 A offenbart die Herstellung eines Kraftpapiers mit antibakteriellen Eigenschaften, bei welchem Chitosan und Allicin als antimikrobielle Wirkstoffkomponenten in die Pulpe eingebracht werden.

Obwohl die Beschichtung von Papiersubstraten mit Chitosan, insbesondere zur Herstellung von Verpackungsmitteln, somit grundsätzlich bekannt war, war es sehr überraschend, dass gerade die erfindungsgemäß verwendete Stoffkombination, welche Harnstoff, mindestens ein Chitosan-Biopolymer mit einem Deacetylierungsgrad (DA) von 70% bis 95 % sowie mindestens eine Dicarbonsäure in wässriger Lösung umfasst, hervorragend geeignet ist, um eine Vielzahl von unterschiedlichen Substraten, insbesondere auch nichtmetallischen Substratmaterialien, mit einer Primerbeschichtung zu versehen, die es ermöglicht, nachfolgend übliche Kombinationen von Dampfphasen-Korrosionsinhibitoren, insbesondere aus wässriger oder wässrig-alkoholischer Lösung, auf solchen vorbehandelten Substraten relativ stabil zu fixieren und damit als besonders leistungsfähige VpCI/VCI-emittierende Verpackungsmittel zu profilieren.

Die erfindungsgemäß als Primer eingesetzten Lösungen haben üblicherweise bei 20 °C einen pH-Wert im Bereich 4,5 ≤ pH ≤ 6,0 und eine dynamische Viskosität η im Bereich 80 ≤ η (mPa - s) ≤ 380. Sofern es zur Anpassung an die Oberflächeneigenschaften des zu beschichtenden Substrats oder die zur Verfügung stehende Auftragstechnik erforderlich ist, kann die dynamische Viskosität η durch Zusatz eines Verdickungsmittels, insbesondere eines Cellulose-basierten, nicht-ionischen Verdickungsmittels, noch entsprechend reguliert werden.

Die Vorbehandlung der Oberflächen der für Verpackungsmittel üblichen Substrate, insbesondere nichtmetallischen Substrate, die als Trägermaterialien für Dampfphasen-Korrosionsinhibitoren vorgesehen sind, mit einem erfindungsgemäßen Primer kann durch jeden üblichen Beschichtungsvorgang, wie Drucken, Rakeln, Streichen oder Rollen erfolgen und einen Nass-Film mit einem Flächengewicht von ≥ 1 g/m² hinterlassen. Nach anschließender Trocknung, insbesondere einer Trocknung an Raumluft, angepasst an den Wassergehalt des Nass-Filmes im Temperaturbereich von 60 °C bis 75 °C im Trockenkanal oder durch Infrarot-Strahler, sind die so vorbehandelten Substrate einsatzbereit, um darauf einzelne oder übliche Kombinationen von Dampfphasen-Korrosionsinhibitoren aus einer diese Wirkstoffe enthaltenden wässrigen oder wässrig-alkoholischen Lösung zu fixieren.

Durch die Anwendung eines erfindungsgemäßen Primers gelingt die Fixierung von Dampfphasen-Korrosionsinhibitoren nicht nur auf durch wässrige Lösungen benetzbaren Papieren, Pappen und Karton, sondern erstmalig auch auf flächigen Kunststoffen, wie Polyethylen, Polypropylen, Polyurethan, Polystyrol, ABS, Biopolymeren wie PLA und PHB sowie textilen Geweben, Vliesen und anderen Materialien, insbesondere hydrophoben Materialien, in Form einer feindispersen, auf dem jeweiligen Substrat ausreichend gut haftenden Schicht, aus der dann die betreffenden VpCI/VCI widerstandsarm sublimieren können. Mit der Auftragsmenge an VpCI/VCI-Beschichtungsmittel hat man zudem die Möglichkeit, das VpCI/VCI- Depot den Anforderungen möglichst kurzer Aufbauphasen anzupassen, so dass die auf diesem Weg erfindungsgemäß ausgerüsteten Substrate, insbesondere nichtmetallischen Substrate innerhalb von Verpackungs-, Lagerungs- und Transportvorgängen der üblichen Gebrauchsmetalle als leistungsfähige funktionsorientierte Gradienten-Materialien (FGMs) einen besonders zuverlässigen temporären Korrosionsschutz gewährleisten.

In spezielleren Ausführungsformen sind die Substrate, insbesondere nichtmetallischen Substrate, dabei aus der Gruppe ausgewählt, welche neben Papier und Karton auch typischerweise hydrophobe Materialien, wie Polyethylen, Polypropylen, Polyurethan, Polystyrol, ABS, Biopolymere wie PLA und PHB, textile Gewebe, Vliese und ähnliche Materialien, typischerweise hydrophobe Materialien, insbesondere in flächiger Form, umfasst.

In einer typischen Ausführungsform stellen diese Substrate Trägermaterialien für den Korrosionsschutz von metallischen Materialien, insbesondere üblichen Gebrauchsmetallen, innerhalb von Verpackungs-, Lagerungs- und Transportvorgängen dar.

Die zu fixierenden Dampfphasen-Korrosionsinhibitoren sind typischerweise aus der Gruppe der üblichen VpCI/VCI-Komponenten ausgewählt, und können beispielsweise aus der Gruppe ausgewählt sein, die aromatische und aliphatische Amine und Carbonsäuren, Aminoalkohole, organische und anorganische Aminsalze, Amin- und Alkalinitrite, Alkalisalze aromatischer und aliphatischer Carbonsäuren, Aminoalkyldiole mit C₃ bis C₅, primäre aromatische Amide, mehrfach substituierte Pyrimidine, Benzotriazol und substituierte Benzotriazole, Benzimidazol und substituierte Benzimidazole sowie aromatische Mercaptothiazole umfasst.

Ein weiterer Aspekt der vorliegenden Erfindung betrifft eine Stoffkombination, welche Harnstoff, mindestens ein Chitosan-Biopolymer mit einem Deacetylierungsgrad von 70% bis 95 % sowie mindestens eine Dicarbonsäure in wässriger Lösung umfasst, wobei das Chitosan als Komponente (1) mit einem Anteil von 0,1 bis 2 Gewichts-%, Harnstoff als Komponente (2) mit 10 bis 25 Gewichts-% und eine Dicarbonsäure als Komponente (3) mit einem Anteil von 0,5 bis 2,5 Gewichts-% in entionisiertem Wasser vollständig gelöst vorliegen.

Die wasserlösliche Dicarbonsäure ist aus der Gruppe der aliphatischen gesättigten Dicarbonsäuren ausgewählt und vorzugsweise aus der Gruppe, die Butandisäure (Bernsteinsäure), Pentandisäure (Glutarsäure), Hexandisäure (Adipinsäure), Heptandisäure (Pimelinsäure), 2-Aminobutandisäure (Asparaginsäure) oder 2-Aminopentandisäure (Glutaminsäure) und Mischungen davon umfasst.

In einer bevorzugten Ausführungsform umfasst die erfindungsgemäße Stoffkombination ferner noch Viskositätsregler, insbesondere Cellulose-basierte, nicht-ionische Verdickungsmittel.

Gegebenenfalls können 2 oder mehr Komponenten der erfindungsgemäßen Stoffkombination auch wenigstens teilweise in miteinander assoziierter Form oder in Form von Konjugaten in der Stoffkombination vorliegen.

Ein noch weiterer Aspekt der vorliegenden Erfindung betrifft eine Substratoberfläche, welche mit einer erfindungsgemäßen Stoffkombination, die Harnstoff, mindestens ein Chitosan-Biopolymer mit einem Deacetylierungsgrad von 70% bis 95 % sowie mindestens eine Dicarbonsäure in wässriger Lösung umfasst, wobei das Chitosan als Komponente (1) mit einem Anteil von 0,1 bis 2 Gewichts-%, Harnstoff als Komponente (2) mit 10 bis 25 Gewichts-% und eine Dicarbonsäure als Komponente (3) mit einem Anteil von 0,5 bis 2,5 Gewichts-% in entionisiertem Wasser vorliegen, insbesondere nach deren Trocknung, als Primer beschichtet ist.

Es handelt sich dabei um nichtmetallische Substratoberflächen, insbesondere in flächiger Form.

In spezielleren Ausführungsformen sind die Substrate dabei aus der Gruppe ausgewählt, welche neben Papier und Karton auch typischerweise hydrophobe Materialien wie Polyethylen, Polypropylen, Polyurethan, Polystyrol, ABS, Biopolymere wie PLA und PHB, textile Gewebe, Vliese und ähnliche Materialien, typischerweise hydrophobe Materialien, insbesondere in flächiger Form, umfasst.

In einem noch weiteren, eng verwandten Aspekt betrifft die vorliegende Erfindung auch ein Trägermaterial für Dampfphasen-Korrosionsinhibitoren, wobei die Dampfphasen-Korrosionsinhibitoren an eine mit einer erfindungsgemäß verwendeten Stoffkombination vorbehandelte Substratoberfläche, insbesondere eines Substrats wie oben beschrieben, vorzugsweise eines nichtmetallischen Substrats, fixiert sind.

Die als Primer erfindungsgemäß anzuwendenden Stoffkombinationen bestehen vorteilhafterweise ausschließlich aus Substanzen, die sich nach an sich bekannten Methoden leicht und gefahrlos verarbeiten lassen und in den anzuwendenden Mengenanteilen als nichttoxisch und die Umwelt nicht gefährdend einzustufen sind. Sie eignen sich darum besonders zur Herstellung von korrosionsschützenden Verpackungsmitteln, die in großem Umfang kostengünstig und ohne nennenswertes Gefährdungspotential anwendbar sind.

Der Anmeldungsgegenstand wird durch die nachfolgenden Beispiele näher erläutert. Wie daraus auch hervorgeht, richten sich Art und Mengenanteil der einzelnen Komponenten in einer erfindungsgemäß zubereiteten und als Primer anzuwendenden wässrigen Lösung hauptsächlich nach der Art und Oberflächenbeschaffenheit des zu beschichtenden Substratmaterials und nicht nach den auf der Chitosan-haltigen Schicht nachfolgend zu fixierenden VpCI/VCI-Komponenten.

### Beispiel 1:

Durch Dosierung der einzelnen Komponenten in der angegebenen Reihenfolge und intensivem Rühren bis maximal 45 °C wurde die folgende erfindungsgemäße Stoffkombination als Primer Nr. 1 zubereitet:

| | |
|---|---|
| 75,5 Gew.-% | entionisiertes Wasser |
| 22,0 Gew.-% | Harnstoff (technisches Granulat) |
| 0,7 Gew.-% | Hexandisäure (Adipinsäure) |
| 1,1 Gew.-% | Chitosan-Pulver Typ 90/100 (DA = 90 %, HEPPE Medical Chitosan, Halle/Sa) |
| 0,5 Gew.-% | Hydroxyethylcellulose (Natrosol 250 GR /Aqualon/France) |

Die entstandene klare Lösung hatte bei 20 °C folgende Kennwerte: pH = 5,8;
η = 285 mPa - s.

Mit diesem Primer Nr. 1 wurden Papierbahnen (Kraftpapier, ungeleimt, Grammatur 70 g/m²) beschichtet, wobei ein Nassfilm von (20 ± 2) g /m² realisiert wurde. Nach dem Trocknen im Luftstromkanal wurde eine Zunahme des Flächengewichts um ca. 5 g/m² registriert, die der aus dem Primer verbliebenen Trockenmasse entspricht.

Die nachfolgend aufzutragende VpCI/VCI-haltige Lösung Nr. 1 wurde entsprechend US 7,824,482 B2 aus den folgenden Substanzen zubereitet:

| | |
|---|---|
| 6,0 Gew.-% | Octansäure (Caprylsäure) |
| 2,0 Gew.-% | 2,4-Hexadiensäure |
| 2,0 Gew.-% | 1,6-Hexandisäure (Adipinsäure) |
| 1,2 Gew.-% | Methylparaben |
| 2,0 Gew.-% | Nicotinsäureamid |
| 1,0 Gew.-% | 5.6 Dimethylbenzimidazol |
| 5,4 Gew.-% | Kaliumhydroxid |
| 0,4 Gew.-% | Natrosol^{®} 250 GR |
| 80,0 Gew.-% | entionisiertes Wasser |

Diese Lösung mit pH ≈ 6,8 bei 20 °C hatte einen Feststoffgehalt von 12 Gew.-%.

Mit dieser VpCI/VCI-haltigen Lösung Nr. 1 wurden nunmehr die mit dem erfindungsgemäßen Primer Nr. 1 vorbehandelten Papierbahnen beschichtet, wobei ein Nassfilm von (25 ± 1) g /m² realisiert wurde. Nach dem Trocknen im Luftstromkanal konnte eine erneute Zunahme des Flächengewichts um ca. 4 g/m² registriert werden, nunmehr dem Masseanteil der verbliebenen VpCI/VCI-Komponenten zuzuordnen.

Als Referenz wurden gleichartige Papierbahnen (Kraftpapier, ungeleimt, Grammatur 70 g/m²) ohne erfindungsgemäße Vorbehandlung sofort mit der gleichen VpCI/VCI-haltigen Lösung Nr. 1 beschichtet und ebenfalls ein Nassfilm von (25 ± 1) g /m² realisiert. Der anschließende Trocknungsprozess im Luftstromkanal verlief allerdings um Minuten verzögert, offensichtlich weil das Wasser dieser VpCI/VCI-haltigen Beschichtungslösung Nr. 1 die gesamte Papiermatrix durchdrungen hatte und ohne Wärmezufuhr schlechter zu desorbieren war. Die nach dem Trocknen registrierbare Zunahme des Flächengewichts dieser Papierbahnen betrug zudem nur ca. 2 g/m² und weist aus, dass im Vergleich zu dem erfindungsgemäß vorbeschichteten Papier ein geringerer Masseanteil der zu fixierenden VpCI/VCI-Komponenten verblieben war. Die chemisch-analytischen Untersuchungen dieses Papiers mittels HPLC des methanolischen Extrakts ergaben, dass insbesondere der Gehalt der betreffenden Carbonsäuren unter den Erwartungen lag, offensichtlich weil ein Teil dieser als wasserdampfflüchtig geltenden VpCI/VCI-Komponenten während des Trocknungsprozesses gemeinsam mit dem verdampfenden Wasser in den Luftstromkanal übergegangen war.

Um nachzuweisen, dass die auf dem erfindungsgemäß vorbehandelten Papier fixierten VpCI/VCI-Komponenten auch entsprechend ihrer relativ hohen spezifischen Oberflächenkonzentrationen emittiert werden, wurden Zuschnitte dieses VpCI/VCI-Papiers zur Beurteilung ihrer VCl-Korrosionsschutzeigenschaften dem üblichen Weckglastest unterzogen.

Die Durchführung des Weckglastests erfolgte unter Anwendung üblicher Weckgläser (Volumen 11), in die jeweils ein mit Löchern versehener Bodeneinsatz aus PMMA, der zur Grundfläche des Weckglases einen Abstand von ca. 15 mm gewährleistet, eingebracht worden war. Nach Dosierung von 15 ml entionisiertem Wasser unter diesem Bodeneinsatz wurden die einzelnen Weckgläser mit dem zu prüfenden VpCI/VCI-Papier ausgekleidet. Das erfolgte jeweils mit einem als Mantel von 13 x 25 cm eingeordneten Streifen und einem kreisrunden Zuschnitt mit ∅ 9 cm für den Deckel, stets mit der beschichteten Seite dem Einsatz mit den vor Korrosion zu schützenden Prüfblechen zugewandt. Diese wurden vor Einlage des Deckels auf dem Bodeneinsatz platziert, wozu eine mit 5 mm tiefen Einkerbungen versehene Leiste aus PMMA diente. Dahinein wurden jeweils 4 Stück sorgfältig gereinigter Prüfbleche (90 x 50 x d) mm unterschiedlicher Art stehend mit ca. 15° Neigung zur Waagrechten bei einer Distanz zueinander von 10 mm positioniert. Je Weckglas waren das je 1 Prüfblech aus Stahl DC 03, kaltgewalzt, niedriggekohlt, Werkstoff-Nr. 1.0347, d = 0,5 mm, Aluminium 99,5, d = 0,625 mm (beide Q-Panel Cleveland), Cu-ETP (MKM Mansfelder Kupfer und Messing GmbH), d = 0,5 mm und feuerverzinktem Stahl DX56D + Z140MBO (Feinkorn-Zinkauflage 140g/m² - 70/70 g/m² - 10 µm, ArcelorMittal), d ≈ 0,8 mm. 2 Ansätze dieser Art wurden als Referenz ohne Positionierung eines VpCI/VCI-Papiers vorbereitet.

Diese Ansätze, wie auch die Weckgläser mit den Prüfblechen, dem entionisierten Wasser und den Zuschnitten des VpCI/VCI-Papiers wurden dicht verschlossen, wozu jeweils ein Deckel mit Dichtring sowie drei Spannklemmen benutzt wurden. Während im Allgemeinen eine Wartezeit von 16 h bei Raumtemperatur für die sog. Aufbauphase der VCI-Komponenten innerhalb des Gefäßes eingeräumt wird, wurde für das jetzt zu prüfende erfindungsgemäß vorbereitete VpCI/VCI-Papier unterstellt, dass diese Aufbauphase bereits nach 4 h Wartezeit abgeschlossen ist. Danach wurden die einzelnen Weckgläser für 16 h in einen Wärmeschrank nach DIN 50011-12 bei 40 °C exponiert, anschließend wieder 8 h bei Raumtemperatur. Diese zyklische Belastung (1 Zyklus = 24 h) wurde nach jeweils 7 Zyklen kurzzeitig unterbrochen, die Weckgläser für ca. 2 Minuten geöffnet, um den ggf. umgesetzten Luftsauerstoff wieder zu ersetzen und den Oberflächenzustand der Bleche zu inspizieren. Nach insgesamt 35 Zyklen wurde die Exposition beendet und jeder Prüfkörper außerhalb der Weckgläser im Detail visuell beurteilt.

### Ergebnis der Prüfung:

Die Prüfbleche der 4 unterschiedlichen Metalle, die zusammen mit dem erfindungsgemäß vorbereiteten und beschichteten VpCI/VCI-Papier eingesetzt worden waren, hatten bei allen 4 Parallelansätzen nach 35 Zyklen ein unverändertes Aussehen.

Für die beiden Ansätze, die als Referenz ohne ein VpCI/VCI-Papier exponiert worden waren, wurde die zyklische Klimabelastung bereits nach 7 Zyklen abgebrochen, weil an allen Prüfblechen Korrosionserscheinungen sichtbar waren, an den Prüfblechen aus DC 03 Rost punktförmig und verstärkt an den Kanten, am AI 99,5 beidseitig eine gelblich braune Anlaufschicht, an den Blechen aus Cu-ETP jeweils von oben beginnend dunkle Flecken und an den Prüfblechen aus verzinktem Stahl in den Kantenbereichen erste fleckenförmige Ansätze von Weißrost.

Die Ergebnisse des Weckglastests belegen überzeugend, dass das erfindungsgemäß vorbehandelte und danach mit einer VpCI/VCI- Kombination ausgerüstete Papier trotz reduzierter Aufbauphase für die üblichen Gebrauchsmetalle selbst unter den extremen Feuchtluftbedingungen bei Langzeitbeanspruchung einen zuverlässigen VCI-Korrosionsschutz entfaltet.

### Beispiel 2:

Mit dem erfindungsgemäßen Primer Nr. 1 aus Beispiel 1 wurde eine weitgehend aus Regenerat produzierte Wellpappe (Typ E-Welle, Grammatur 320 g/m², Hans Kolb Wellpappe, Memmingen) vorbehandelt, indem auf den Wellpappbogen einseitig mittels Handrakel ein Nassauftrag von (30 ± 3) g/m² realisiert wurde. Nachdem Trocknen dieser Wellpappbogen im Luftstromkanal aufrechtstehend bei Raumtemperatur war ein Trockenauftrag von etwa 7,5 g/m² nachzuweisen.

Auf der auf diese Weise mit dem erfindungsgemäßen Primer Nr. 1 vorbehandelten Seite der Wellpappe wurde nachfolgend wieder die VpCI/VCI-haltigen Lösung Nr. 1 aus Beispiel 1 mittels Handrakel aufgetragen, wobei für den Zweck eines Mehrwegeinsatzes der beschichteten Wellpappe nunmehr ein Nassfilm von (50 ± 3) g /m² realisiert wurde. Nach dem Trocknen im Luftstromkanal konnte eine erneute Zunahme des Flächengewichts um ca. 8,5 g/m² registriert werden, nunmehr dem Masseanteil der verbliebenen VpCI/VCI-Komponenten zuzuordnen.

Als Referenz wurden gleichartige Wellpappbogen ohne erfindungsgemäße Vorbehandlung sofort mit dergleichen VpCI/VCI-haltigen Lösung Nr. 1 beschichtet und ebenfalls ein Nassfilm von (50 ± 3) g /m² realisiert. Der anschließende Trocknungsprozess im Luftstromkanal verlief allerdings stärker verzögert, offensichtlich weil das Wasser dieser VpCI/VCI-haltigen Beschichtungslösung Nr. 1 tiefer in die Wellpappe eingedrungen war und nur durch 5 min Wärmezufuhr auf 65 °C in einen handtrockenen Zustand zu überführen war. Die nach dem Trocknen registrierbare Zunahme des Flächengewichts dieser Papierbahnen war im Vergleich zu der erfindungsgemäß vorbeschichteten Wellpappe deutlich geringer und betrug nur ca. 3 g/m². Die chemisch-analytischen Untersuchungen von Segmenten dieser Wellpappe mittels HPLC des methanolischen Extrakts ergaben wieder, dass während des Trocknungsprozesses vorzugsweise ein Anteil der betreffenden, als wasserdampfflüchtig geltenden Carbonsäuren verlustig gegangen war.

Um nachzuweisen, inwieweit die auf der Wellpappe aus dickeren Nassfilmen fixierten VpCI/VCI-Komponenten sanfteren mechanischen Beanspruchungen widerstehen, wurden von beiden beschichteten Wellpappbogen einige kreisrunde Segmente mit ∅ 9 cm ausgestanzt, mit der beschichteten Seite nach unten über einer Petrischale gehalten und auf der Rückseite mehrfach mit einem Laborspatel abgeklopft. Anschließend wurde die Petrischale mit 5 ml Methanol ausgespült und das Eluat mittels HPLC bzw. GC/MS zum qualitativen Nachweis ggf. herausgerieselter VpCI/VCI-Komponenten analysiert.

### Ergebnis der Prüfung:

Bei den Segmenten der erfindungsgemäß vorbehandelten und danach mit einer VpCI/VCI-Kombination ausgerüsteten Wellpappe trat durch die beschriebene mechanische Beanspruchung kein Herausrieseln oder Abspreiten von VpCI/VCI-Komponenten auf, denn das betreffende Methanol-Eluat zeigte selbst im GC/MS keine zuordenbaren Auffälligkeiten.

Bei den Segmenten der lediglich mit der VpCI/VCI-haltigen Lösung Nr. 1 beschichteten Wellpappe waren nach dem Abklopfen in der Petrischale bereits leichte staubförmige Flecken erkennbar. Im betreffenden Methanol-Eluat konnten Spuren von Octansäure, Methylparaben und 5.6 Dimethyl-benzimidazol nachgewiesen werden, wodurch erneut belegt wird, dass die aus wässrigen Lösungen auf Papier oder Karton verbleibenden pulverförmigen Feststoffe nur geringfügig anhaften, so dass auf diese Weise hergestellte VpCI/VCI-Produkte nicht für einen zuverlässigen VCI-Korrosionsschutz geeignet sind.

Wie die Ergebnisse des beschriebenen Tests überzeugend zeigen, haben demgegenüber die entsprechenden erfindungsgemäß vorbereiteten und beschichteten VpCI/VCI-Produkte die entsprechenden Wirkstoffe auch in höheren spezifischen Konzentrationen zumindest so stabil fixiert, dass sie sanfteren mechanischen, nicht abrasiv wirkenden Beanspruchungen vorteilhaft widerstehen, ohne dass ihre für den VCI-Korrosionsschutz erforderliche Sublimationsfähigkeit beeinträchtigt wird. Letzteres wurde bereits durch die Ergebnisse des in Beispiel 1 beschriebenen Weckglastests belegt.

### Beispiel 3:

Durch Dosierung der einzelnen Komponenten in der angegebenen Reihenfolge und intensivem Rühren bis maximal 45 °C wurde die folgende erfindungsgemäße Stoffkombination als Primer Nr. 2 zubereitet:

| | |
|---|---|
| 79,5 Gew.-% | entionisiertes Wasser |
| 19,0 Gew.-% | Harnstoff (technisches Granulat) |
| 0,7 Gew.-% | Pentandisäure (Glutarsäure) |
| 1,0 Gew.-% | Chitosan-Pulver Typ 90/100 (DA = 90 %, HEPPE Medical Chitosan, Halle/Sa) |

Die entstandene klare Lösung hatte bei +20°C folgende Kennwerte: pH = 5,5;
η = 85 mPa · s.

Mit diesem Primer Nr. 2 wurde ein 6 mm dickes Plattenmaterial aus expandiertem Polystyren (EPS, Saarpor Kunststoffe, Neunkirchen) vorbehandelt, indem mittels PUR-Schaumrolle einseitig ein Nassfilm von (90 ± 5) g/m² realisiert wurde. Das Trocknen dieser Platten erfolgte 2 min. bei (65 ± 5) °C. Danach war die Beschichtung grifffest, wobei die Zunahme des Flächengewichts einer aus Primer Nr. 2 verbliebenen Trockenmasse von ca. 19 g/m² entsprach. Die entstandene Beschichtung war cellophanartig, reinweiß gefärbt und typisch strukturiert, so dass sie auch visuell gut wahrgenommen werden konnte.

Die nachfolgend aufzutragende wässrig-ethanolische VpCI/VCI-haltige Lösung Nr. 2 wurde aus den folgenden Substanzen zubereitet:

| | |
|---|---|
| 65,0 Gew.-% | entionisiertes Wasser |
| 22,0 Gew.-% | technischer Ethanol |
| 5,0 Gew.-% | Natriumbenzoat |
| 5,0 Gew.-% | 1H-Benzotriazol |
| 0,5 Gew.-% | Methylparaben |
| 1,5 Gew.-% | Natriumnitrit |
| 1,0 Gew.-% | Natriumcarbonat |

Diese Lösung mit pH ≈ 8,6 bei 20 °C hatte einen Feststoffgehalt von ca. 13 Gew.-%. Mit dieser VpCI/VCI-haltigen Lösung Nr. 2 wurden nunmehr die mit dem erfindungsgemäßen Primer Nr. 2 vorbehandelten EPS-Platten mittels PUR-Schaumrolle beschichtet, wobei ein Nassfilm von (25 ± 1) g /m² realisiert wurde. Nach dem Trocknen im Luftstromkanal konnte eine erneute Zunahme des Flächengewichts um ca. 3 g/m² registriert werden, nunmehr dem Masseanteil der verbliebenen VpCI/VCI-Komponenten zuzuordnen.

Die Herstellung von Referenzmustern mit EPS-Platten, die nicht erfindungsgemäß vorbehandelt worden waren, misslang, da die wässrig-ethanolische VpCI/VCI-haltige Lösung Nr. 2 von ihren Oberflächen abperlte, ohne dass VCI-Wirkstoffe darauf zurückblieben.

Um nachzuweisen, dass die auf den erfindungsgemäß vorbehandelten EPS-Platten fixierten VpCI/VCI-Komponenten auch entsprechend ihrer spezifischen Oberflächenkonzentrationen emittiert werden, wurden Zuschnitte dieser VpCI/VCI-EPS-Platten von 90 x 50 mm zur Beurteilung ihrer VCI-Korrosionsschutzeigenschaften dem in Beispiel 1 beschriebenen Weckglastest unterzogen.

Da die nitrithaltige Zubereitung der VpCI/VCI-haltigen Lösung Nr. 2 vorzugsweise für den Korrosionsschutz von Eisenwerkstoffen zu verwenden ist, wurde die in die einzelnen Weckgläser positionierte Leiste aus PMMA jeweils mittig mit einem Prüfblech aus Stahl DC 03 und daneben einer gleichgroßen, aber 2 mm dicken Platte aus Grauguss GGG25 bestückt, an den Außenseiten jeweils flankiert von einem Zuschnitt des beschichteten EPS-Materials, mit der beschichteten Seite in Richtung der zu schützenden Prüfkörper orientiert. Die 5 mm tiefen Einkerbungen der Leisten aus PMMA waren vorher in ihrer Breite der Dicke der GGG- und EPS-Platten angepasst worden.

Zwei Ansätze dieser Art wurden als Referenz ohne Positionierung der mit dem VpCI/VCI-System ausgestatteten EPS-Platten vorbereitet.

Die Durchführung dieses Weckglastests entsprach im Übrigen wieder der in Beispiel 1 gegebenen Beschreibung.

### Ergebnis der Prüfung:

Die Prüfkörper aus Stahl DC03 und GGG25, die zusammen mit Segmenten der erfindungsgemäß vorbereiteten und mit VpCI/VCI ausgerüsteten EPS-Platten eingesetzt worden waren, hatten bei allen 4 Parallelansätzen nach 35 Zyklen ein unverändertes Aussehen.

Für die beiden Ansätze, die als Referenz ohne ein VpCI/VCI-System exponiert worden waren, musste die zyklische Klimabelastung bereits nach 7 Zyklen abgebrochen werden, da vor allem die Prüfkörper aus GGG25 schon stark mit Rost überzogen waren.

Die Ergebnisse dieses Weckglastests belegen überzeugend, dass das erfindungsgemäß vorbehandelte und danach mit einer VpCI/VCI- Kombination ausgerüstete EPS-Material trotz reduzierter Aufbauphase die fixierten VpCI/VCI-Komponenten in ausreichendem Maße emittiert, so dass selbst unter den extremen Feuchtluftbedingungen bei Langzeitbeanspruchung einen zuverlässiger VCI-Korrosionsschutz resultiert.

Auf diese erfindungsgemäße Weise auch mit einem anderen VpCI/VCI-System ausgerüstete EPS-Platten können beispielsweise als VpCI/VCI-Emitter fungierende Innenseiten oder Gefache in VCI-Verpackungsbehältern wie Kleinkartons oder Trays bzw. Deckel für diese Behältnisse eingesetzt werden.

### Beispiel 4:

Durch Dosierung der einzelnen Komponenten in der angegebenen Reihenfolge und intensivem Rühren wurde die folgende erfindungsgemäße Stoffkombination als Primer Nr. 3 zubereitet:

| | |
|---|---|
| 79,3 Gew.-% | entionisiertes Wasser |
| 19,0 Gew.-% | Harnstoff (technisches Granulat) |
| 0,7 Gew.-% | Pentandisäure (Glutarsäure) |
| 1,0 Gew.-% | Chitosan-Pulver Typ 80/200 (DA = 80%, HEPPE Medical Chitosan, Halle/Sa.) |

Die entstandene klare Lösung hatte bei 20 °C folgende Kennwerte: pH = 5,8;
dynamische Viskosität η = 185 mPa·s.

Mit diesem Primer Nr. 3 wurde wieder das 6 mm dicke Plattenmaterial aus expandiertem Polystyren (EPS, Fa. Saarpor Kunststoffe KG, Neunkirchen) vorbehandelt, indem mittels PUR-Schaumrolle einseitig ein Nass-Film von (90 ± 5) g/m² realisiert wurde. Das Trocknen dieser Platten erfolgte 2 min. bei (65 ± 5) °C. Danach war die Beschichtung grifffest, wobei die Zunahme des Flächengewichts einer aus Primer Nr. 3 verbliebenen Trockenmasse von ca. 20 g/m² entsprach. Wie bereits im Beispiel 3 war die entstandene Beschichtung wieder cellophanartig, reinweiß gefärbt und typisch strukturiert, so dass sie auch visuell gut wahrgenommen werden konnte.

Die nachfolgend aufzutragende VpCI/VCI-haltige Lösung Nr. 3 wurde entsprechend EP 2 357 266 aus den folgenden Substanzen zubereitet:
70 Gew.-% entionisiertes Wasser
19,5 Gew.-% technischer Ethanol
4,7 Gew.-% Natriumbenzoat
2,6 Gew.-% 1H-Benzotriazol
1,4 Gew.-% N-Butylharnstoff
1,3 Gew.-% 2-Amino-4-methyl-pyrimidin
0,5 Gew.-% 2-Amino-2-methyl-propandiol-1,3

Diese Lösung mit pH ≈ 8,2 bei 20 °C hatte einen Feststoffgehalt von 10,5 Gew.-%. Mit dieser VpCI/VCI-haltigen Lösung Nr. 3 wurden nunmehr die mit dem erfindungsgemäßen Primer Nr. 3 vorbehandelten EPS-Platten mittels PUR-Schaumrolle beschichtet, wobei ein Nassfilm von (35 ± 1) g /m² realisiert wurde. Nach dem Trocknen im Luftstromkanal konnte eine erneute Zunahme des Flächengewichts um ca. 3,7 g/m² registriert werden, nunmehr dem Masseanteil der verbliebenen VpCI/VCI-Komponenten zuzuordnen.

Die Herstellung von Referenzmustern mit EPS-Platten, die nicht erfindungsgemäß vorbehandelt worden waren, misslang, da die wässrig-ethanolische VpCI/VCI-haltige Lösung Nr. 3 von ihren Oberflächen abperlte, ohne dass VCI-Wirkstoffe darauf zurückblieben.

Um nachzuweisen, inwieweit die auf den erfindungsgemäß vorbehandelten EPS-Platten aus dickeren Nassfilmen fixierten VpCI/VCI-Komponenten sanfteren mechanischen Beanspruchungen widerstehen, wurden Zuschnitte dieser VpCI/VCI-EPS-Platten von 90 x 50 mm wieder mit der beschichteten Seite nach unten über einer Petrischale gehalten und auf der Rückseite mehrfach mit einem Laborspatel abgeklopft. Anschließend wurde die Petrischale mit 5 ml Methanol ausgespült und das Eluat mittels HPLC bzw. GC/MS zum qualitativen Nachweis ggf. abgerieselter VpCI/VCI-Komponenten analysiert.

### Ergebnis der Prüfung:

Bei den Zuschnitten der erfindungsgemäß vorbehandelten und danach mit einer VpCI/VCI-Kombination ausgerüsteten EPS-Platten trat durch die beschriebene mechanische Beanspruchung kein Abspreiten von VpCI/VCI-Komponenten auf, denn das betreffende Methanol-Eluat aus der Petrischale zeigte selbst im GC/MS keine zuordenbaren Auffälligkeiten.

Mit diesem Ergebnis wird überzeugend belegt, dass auf erfindungsgemäß vorbereiteten EPS-Platten aus wässrig-alkoholischen Lösungen VpCI/VCI-Komponenten auch in höheren spezifischen Konzentrationen zumindest so stabil fixiert, dass sie sanfteren mechanischen, nicht abrasiv wirkenden Beanspruchungen vorteilhaft widerstehen, ohne dass ihre für den VCI-Korrosionsschutz erforderliche Sublimationsfähigkeit beeinträchtigt wird. Auf diesem Weg leistungsfähige VpCI/VCI-emittierende Mehrwegverpackungsmittel bereitzustellen, erscheint damit geradezu empfehlenswert, zumal das ohne die erfindungsgemäße Vorbehandlung der EPS-Oberflächen nicht möglich ist.

### Beispiel 5:

Durch Dosierung der einzelnen Komponenten in der angegebenen Reihenfolge und intensivem Rühren wurde die folgende erfindungsgemäße Stoffkombination als Primer Nr. 4 zubereitet:

| | |
|---|---|
| 80,0 Gew.-% | entionisiertes Wasser |
| 18,0 Gew.-% | Harnstoff (technisches Granulat) |
| 0,9 Gew.-% | Butandisäure (Bernsteinsäure) |
| 1,1 Gew.-% | Chitosan-Pulver der Charge 300.298 (DA = 90%, C. E. RÖPER, Hamburg) |

Die entstandene klare Lösung hatte bei 20 °C folgende Kennwerte: pH = 5,3;
η = 225 mPa - s.

Mit diesem mittelviskosen Primer Nr. 4 wurde ein 12 mm dicker PUR-Blockschaum MA 5080, weiß (METZELER Schaum, Memmingen) mittels Rollen beschichtet, wobei ein Nassfilm von (75 ± 5 g /m²) realisiert wurde. Nach dem Trocknen des beschichteten PUR-Blockschaums über ca. 2 min. bei 60 bis 70 °C im Umluftkanal wurde eine Zunahme des Flächengewichts von ca. 15 g/m² registriert, die der aus dem Primer Nr. 4 verbliebenen Trockenmasse entspricht. Die entstandene Beschichtung war wieder cellophanartig, reinweiß gefärbt und typisch strukturiert, so dass sie selbst auf dem weißen PUR-Blockschaum visuell gut wahrgenommen werden konnte.

Die nachfolgend aufzutragende wässrige VpCI/VCI-haltige Lösung Nr. 4 wurde aus den folgenden Substanzen zubereitet:
81,5 Gew.-% entionisiertes Wasser
8,5 Gew.-% Natriumbenzoat
7,0 Gew.-% 1H-Benzotriazol
1,0 Gew.-% Benzoesäure
2,0 Gew.-% Natriumoctanoat (Natriumcaprylat)

Diese Lösung mit pH ≈ 5,5 bei 20 °C besitzt einen Feststoffgehalt von 18,5 Gew.-%. Mit dieser VpCI/VCI-haltigen Lösung Nr. 4 wurde nunmehr der mit dem erfindungsgemäßen Primer Nr. 4 vorbehandelte PUR-Blockschaum mittels PUR-Schaumrolle beschichtet, wobei ein Nassfilm von (30 ± 3) g /m² realisiert wurde.

Nach dem Trocknen im Luftstromkanal konnte eine erneute Zunahme des Flächengewichts um ca. 5,5 g/m² registriert werden, nunmehr dem Masseanteil der verbliebenen VpCI/VCI-Komponenten zuzuordnen.

Die Herstellung von Referenzmustern mit PUR-Blockschaum MA 5080, der nicht erfindungsgemäß vorbehandelt worden war, misslang, da die wässrige VpCI/VCI-haltige Lösung Nr. 4 von ihren Oberflächen abperlte, ohne dass VCI-Wirkstoffe darauf zurückblieben.

Um nachzuweisen, inwieweit die auf den erfindungsgemäß vorbehandelten PUR-Blockschaum aus dickeren Nassfilmen fixierten VpCI/VCI-Komponenten sanfteren mechanischen Beanspruchungen widerstehen, wurden Zuschnitte dieses VpCI/VCI-Blockschaums von 90 x 50 mm analog dem in Beispiel 4 beschriebenen Ritual geprüft.

### Ergebnis der Prüfung:

Bei den Zuschnitten des erfindungsgemäß vorbehandelten und danach mit einer VpCI/VCI-Kombination ausgerüsteten PUR-Blockschaums trat durch die beschriebene mechanische Beanspruchung kein Abspreiten oder Herausrieseln von VpCI/VCI-Komponenten auf, denn das betreffende Methanol-Eluat aus der Petrischale zeigte selbst im GC/MS keine zuordenbaren Auffälligkeiten.

Mit diesem Ergebnis wird überzeugend belegt, dass auf erfindungsgemäß vorbereitetem PUR-Blockschaum aus wässrigen Lösungen VpCI/VCI-Komponenten auch in höheren spezifischen Konzentrationen zumindest so stabil fixiert werden, dass sie sanfteren mechanischen, nicht abrasiv wirkenden Beanspruchungen vorteilhaft widerstehen, ohne dass ihre für den VCI-Korrosionsschutz erforderliche Sublimationsfähigkeit beeinträchtigt wird. Auf diesem Weg z.B. leistungsfähige VpCI/VCI-Spender als Zwischenlagen in für den temporären Korrosionsschutz eingesetzten Kunststoff-Tray's bereitzustellen, erscheint wieder empfehlenswert, zumal das ohne die erfindungsgemäße Vorbehandlung eines PUR-Blockschaums nicht möglich ist.

### Beispiel 6:

Durch Dosierung der einzelnen Komponenten in der angegebenen Reihenfolge und intensivem Rühren wurde die folgende erfindungsgemäße Stoffkombination als Primer Nr. 5 zubereitet:

| | |
|---|---|
| 80,0 Gew.-% | entionisiertes Wasser |
| 18,0 Gew.-% | Harnstoff (technisches Granulat) |
| 0,9 Gew.-% | Pentandisäure (Glutarsäure) |
| 1,1 Gew.-% | Chitosan-Pulver der Charge 300.298 (DA = 90%, C. E. RÖPER, Hamburg) |

Die entstandene klare Lösung hatte bei 20 °C folgende Kennwerte: pH = 5,4;
dynamische Viskosität η = 220 mPa s.

Mit diesem mittelviskosen Primer Nr. 5 wurden Platten aus expandiertem Polypropylen (EPP, BS Systems, Zusmarshausen) beschichtet, wobei ein Nassfilm von (20 ± 2) g /m² realisiert wurde. Nach dem Trocknen im Luftstromkanal wurde eine Zunahme des Flächengewichts um ca. 5 g/m² registriert, die der Trockenmasse entspricht, die aus dem Primer resultiert. Die entstandene Beschichtung war wieder cellophanartig, reinweiß gefärbt und typisch strukturiert, so dass sie auch visuell gut wahrgenommen werden konnte.

Die nachfolgend aufzutragende wässrige VpCI/VCI-haltige Lösung Nr. 5 wurde aus den folgenden Substanzen zubereitet:
80,0 Gew.-% entionisiertes Wasser
10,0 Gew.-% Natriumbenzoat
6,0 Gew.-% 1H-Benzotriazol
6,0 Gew.-% Cyclohexylammoniumbenzoat

Diese Lösung mit pH ≈ 6,7 bei 20°C besitzt einen Feststoffgehalt von 22 Gew.-%. Mit dieser VpCI/VCI-haltigen Lösung Nr. 5 wurden nunmehr die mit dem erfindungsgemäßen Primer Nr. 5 vorbehandelten EPP-Platten mittels PUR-Schaumrolle beschichtet, wobei ein Nassfilm von (15 ± 2) g /m² realisiert wurde.

Nach dem Trocknen im Luftstromkanal konnte eine erneute Zunahme des Flächengewichts um ca. 4,0 g/m² registriert werden, nunmehr dem Masseanteil der verbliebenen VpCI/VCI-Komponenten zuzuordnen.

Die Herstellung von Referenzmustern mit den EPP-Platten, die nicht erfindungsgemäß vorbehandelt worden waren, misslang erwartungsgemäß, da die wässrige VpCI/VCI-haltige Lösung Nr. 5 von ihren Oberflächen abperlte, ohne dass VCI-Wirkstoffe darauf zurückblieben.

Um nachzuweisen, dass die auf den erfindungsgemäß vorbehandelten EPP-Platten fixierten VpCI/VCI-Komponenten auch entsprechend ihrer spezifischen Oberflächenkonzentrationen emittiert werden, wurden Zuschnitte dieser VpCI/VCI-EPP-Platten von 90 x 50 x 2 mm zur Beurteilung ihrer VCl-Korrosionsschutzeigenschaften dem in Beispiel 1 beschriebenen Weckglastest unterzogen.

Da die Zubereitung der VpCI/VCI-haltigen Lösung Nr. 5 vorzugsweise für den Korrosionsschutz von Al-Werkstoffen und verzinkten Stählen zu verwenden ist, wurde die in die einzelnen Weckgläser positionierte Leiste aus PMMA jeweils mittig mit einem Prüfblech aus Aluminium 99,5, d = 0,625 mm (beide Q-Panel Cleveland), sowie einem Prüfblech aus feuerverzinktem Stahl DX56D + Z140MBO (Feinkorn-Zinkauflage 140g/m² - 70/70 g/m² - 10 µm, ArcelorMittal), d ≈ 0,8 mm bestückt, an den Außenseiten jeweils flankiert von einem Zuschnitt des erfindungsgemäß beschichteten EPP-Materials, mit der beschichteten Seite in Richtung der zu schützenden Prüfkörper orientiert. Die 5 mm tiefen Einkerbungen der Leisten aus PMMA waren vorher an diesen Stellen in ihrer Breite der Dicke der EPP-Platten angepasst worden.

2 Ansätze dieser Art wurden als Referenz ohne Positionierung der mit dem VpCI/VCI-System ausgestatteten EPP-Platten vorbereitet. Die Durchführung dieses Weckglastests entsprach im Übrigen wieder der in Beispiel 1 gegebenen Beschreibung.

### Ergebnis der Prüfung:

Die Prüfkörper aus AI 99,5 und dem feuerverzinkten Stahl, die zusammen mit Segmenten der erfindungsgemäß vorbereiteten und mit VpCI/VCI ausgerüsteten EPP-Platten eingesetzt worden waren, hatten bei allen 4 Parallelansätzen nach 35 Zyklen ein unverändertes Aussehen.

Für die beiden Ansätze, die als Referenz ohne ein VpCI/VCI-System exponiert worden waren, musste die zyklische Klimabelastung bereits nach 7 Zyklen abgebrochen werden, da vor allem die Prüfkörper aus dem feuerverzinkten Stahl schon stark mit Rot- und Weiß-Rost überzogen waren.

Die Ergebnisse dieses Weckglastests belegen überzeugend, dass das erfindungsgemäß vorbehandelte und danach mit einer VpCI/VCI- Kombination ausgerüstete EPP-Material trotz reduzierter Aufbauphase die fixierten VpCI/VCI-Komponenten in ausreichendem Maße emittiert, so dass selbst unter den extremen Feuchtluftbedingungen bei Langzeitbeanspruchung einen zuverlässiger VCl-Korrosionsschutz resultiert.

Analoge Resultate wurden bei der Ausrüstung und Testung von extrudierten PP-Massivplatten mit sehr schwachem Relief (Eicoplast Kunststoffverarbeitung, Rödinghausen) erhalten.

Auf diese erfindungsgemäße Weise auch mit einem anderen VpCI/VCI-System ausgerüstete Polyolefin-Platten können ebenfalls als VpCI/VCI-Emitter fungierende Innenseiten oder Gefache von für den temporären Korrosionsschutz einzusetzenden Kunststoff-Trays vorteilhaft zum Einsatz gebracht werden.

## Patentansprüche

1. Verwendung einer Stoffkombination, welche Harnstoff, mindestens ein Chitosan-Biopolymer mit einem Deacetylierungsgrad von 70% bis 95 % sowie mindestens eine Dicarbonsäure in wässriger Lösung umfasst, als Primer zur Vorbehandlung der Oberflächen von Substraten, die als Trägermaterialien für Dampfphasen-Korrosionsinhibitoren vorgesehen sind, um die nachfolgende Fixierung von Dampfphasen-Korrosionsinhibitoren aus einer diese Wirkstoffe enthaltenden wässrigen oder wässrig alkoholischen Lösung auf diesen Substratoberflächen zu fördern oder zu ermöglichen.

2. Verwendung gemäß Anspruch 1, bei welcher die wasserlösliche Dicarbonsäure aus der Gruppe der aliphatischen gesättigten Dicarbonsäuren ausgewählt ist.

3. Verwendung gemäß Anspruch 2, wobei die Dicarbonsäure aus der Gruppe, die Butandisäure, Pentandisäure, Hexandisäure, Heptandisäure, 2-Aminobutandisäure, 2-Aminopentandisäure und Mischungen davon umfasst, ausgewählt ist.

4. Verwendung gemäß einem der Ansprüche 1 bis 3, wobei in der Stoffkombination das Chitosan als Komponente (1) mit einem Anteil von 0,1 bis 2 Gewichts-%, Harnstoff als Komponente (2) mit 10 bis 25 Gewichts-% und eine Dicarbonsäure als Komponente (3) mit einem Anteil von 0,5 bis 2,5 Gewichts-% in entionisiertem Wasser vollständig gelöst vorliegen.

5. Verwendung gemäß einem der Ansprüche 1 bis 4, wobei die Stoffkombination ferner noch Cellulose-basierte, nicht-ionische Verdickungsmittel als Viskositätsregler umfasst.

6. Verwendung gemäß einem der Ansprüche 1 bis 5, wobei die Substrate nichtmetallische Substrate sind.

7. Verwendung gemäß einem der Ansprüche 1 bis 6, wobei die Substrate aus der Gruppe ausgewählt sind, welche Papier, Karton, flächige Kunststoffe, Biopolymere, textile Gewebe und Vliese, sowie ähnliche Materialien in flächiger Form umfasst.

8. Verwendung gemäß einem der Ansprüche 1 bis 7, wobei die Substrate aus der Gruppe ausgewählt sind, welche Polyethylen, Polypropylen, Polyurethan, Polystyrol, ABS, PLA und PHB und andere hydrophobe Materialien umfasst.

9. Verwendung gemäß einem der Ansprüche 1 bis 8, wobei die Substrate Trägermaterialien für den Korrosionsschutz von metallischen Materialien innerhalb von Verpackungs-, Lagerungs- und Transportvorgängen sind.

10. Verwendung gemäß einem der Ansprüche 1 bis 9, wobei die Dampfphasen-Korrosionsinhibitoren aus der Gruppe der üblichen VpCI/VCI-Komponenten ausgewählt sind.

11. Verwendung gemäß Anspruch 10, wobei die Dampfphasen-Korrosionsinhibitoren aus der Gruppe ausgewählt sind, welche aromatische und aliphatische Amine und Carbonsäuren, Aminoalkohole, organische und anorganische Aminsalze, Amin- und Alkalinitrite, Alkalisalze aromatischer und aliphatischer Carbonsäuren, Aminoalkyldiole mit C₃ bis C₅, primäre aromatische Amide, mehrfach substituierte Pyrimidine, Benzotriazol und substituierte Benzotriazole, Benzimidazol und substituierte Benzimidazole sowie aromatische Mercaptothiazole umfasst.

12. Verfahren zur Vorbehandlung der Oberflächen von Substraten, die als Trägermaterialien für Dampfphasen-Korrosionsinhibitoren vorgesehen sind, um die nachfolgende Fixierung von Dampfphasen-Korrosionsinhibitoren auf diesen Substratoberflächen aus einer diese Wirkstoffe enthaltenden wässrigen oder wässrig alkoholischen Lösung zu fördern oder zu ermöglichen, welches die Aufbringung einer Stoffkombination wie in einem der Ansprüche 1 bis 5 definiert als Primer durch einen Nass-Film-mit einem Flächengewicht von ≥ 1 g/m² umfasst.

13. Verfahren gemäß Anspruch 12, wobei der Primer-Prozess durch Drucken, Rakeln, Streichen oder Rollen mit anschließender Trocknung erfolgt.

14. Verfahren gemäß Anspruch 12, wobei die Trocknung an Raumluft, angepasst an den Wassergehalt des Nass-Filmes im Temperaturbereich von 60 °C bis 75 °C im Trockenkanal oder durch Infrarot-Strahler erfolgt.

15. Verwendung von Substraten, welche mit einer Stoffkombination wie in einem der Ansprüche 1 bis 5 definiert vorbehandelt und getrocknet wurden, zur nachfolgenden Fixierung von Dampfphasen-Korrosionsinhibitoren aus einer diese Wirkstoffe enthaltenden wässrigen oder wässrig alkoholischen Lösung auf diesen Substraten.

16. Trägermaterial für Dampfphasen-Korrosionsinhibitoren, wobei die Dampfphasen-Korrosionsinhibitoren an eine Substratoberfläche, die mit einer Stoffkombination wie in einem der Ansprüche 1 bis 5 definiert vorbehandelt wurde, fixiert sind.

17. Trägermaterial nach Anspruch 16, Verfahren nach Anspruch 12 oder Verwendung nach Anspruch 15, wobei die Substrate nichtmetallische Substrate sind.

18. Stoffkombination, welche Harnstoff, mindestens ein Chitosan-Biopolymer mit einem Deacetylierungsgrad von 70% bis 95 % sowie mindestens eine Dicarbonsäure in wässriger Lösung umfasst, wobei das Chitosan als Komponente (1) mit einem Anteil von 0,1 bis 2 Gewichts-%, Harnstoff als Komponente (2) mit 10 bis 25 Gewichts-% und eine Dicarbonsäure als Komponente (3) mit einem Anteil von 0,5 bis 2,5 Gewichts-% in entionisiertem Wasser vollständig gelöst vorliegen.

19. Stoffkombination gemäß Anspruch 18, bei welcher die wasserlösliche Dicarbonsäure aus der Gruppe der aliphatischen gesättigten Dicarbonsäuren ausgewählt ist.

20. Stoffkombination gemäß Anspruch 19, wobei die Dicarbonsäure aus der Gruppe, die Butandisäure, Pentandisäure, Hexandisäure, Heptandisäure, 2-Aminobutandisäure, 2-Aminopentandisäure und Mischungen davon umfasst, ausgewählt ist.

21. Stoffkombination gemäß einem der Ansprüche 18 bis 20, welche ferner noch Cellulose-basierte, nicht-ionische Verdickungsmittel als Viskositätsregler umfasst.

22. Substratoberfläche, welche mit einer Stoffkombination wie in einem der Ansprüche 18 bis 21 definiert oder einer entsprechenden getrockneten Stoffkombination beschichtet ist, wobei es sich um nichtmetallische Substrate handelt.

23. Substratoberfläche nach Anspruch 22, wobei die Substrate aus der Gruppe ausgewählt sind, welche Papier, Karton, flächige Kunststoffe, Biopolymere, textile Gewebe, Vliese und ähnliche hydrophile Materialien in flächiger Form umfasst und/oder aus der Gruppe, welche Polyethylen, Polypropylen, Polyurethan, Polystyrol, ABS, PLA und PHB und andere hydrophobe Materialien umfasst.

## Claims

1. Use of a substance combination which comprises urea, at least one chitosan biopolymer having a degree of deacetylation of from 70% to 95%, and at least one dicarboxylic acid in aqueous solution, as a primer for the pretreatment of the surfaces of substrates, which are provided as carrier materials for vapour phase corrosion inhibitors, in order to facilitate or enable the subsequent fixing to those substrate surfaces of vapour phase corrosion inhibitors from an aqueous or aqueous-alcoholic solution containing those active ingredients.

2. The use according to claim 1, in which the water-soluble dicarboxylic acid is selected from the group of the aliphatic saturated dicarboxylic acids.

3. The use according to claim 2, wherein the dicarboxylic acid is selected from the group which comprises butanedioic acid, pentanedioic acid, hexanedioic acid, heptanedioic acid, 2-aminobutanedioic acid, 2-aminopentanedioic acid and mixtures thereof.

4. The use according to any one of claims 1 to 3, wherein the chitosan is present in the substance combination as component (1) in an amount of from 0.1 to 2% by weight, urea is present as component (2) in an amount of from 10 to 25% by weight and a dicarboxylic acid is present as component (3) in an amount of from 0.5 to 2.5% by weight, completely dissolved in deionised water.

5. The use according to any one of claims 1 to 4, wherein the substance combination further comprises cellulose-based, non-ionic thickeners as viscosity regulators.

6. The use according to any one of claims 1 to 5, wherein the substrates are non-metallic substrates.

7. The use according to any one of claims 1 to 6, wherein the substrates are selected from the group which comprises paper, cardboard, flat or sheet-form plastics materials, biopolymers, textile woven fabrics and nonwovens, as well as similar materials in flat or sheet form.

8. The use according to any one of claims 1 to 7, wherein the substrates are selected from the group which comprises polyethylene, polypropylene, polyurethane, polystyrene, ABS, PLA and PHB and other hydrophobic materials.

9. The use according to any one of claims 1 to 8, wherein the substrates are carrier materials for the corrosion protection of metallic materials within packaging, storage and transportation processes.

10. The use according to any one of claims 1 to 9, wherein the vapour phase corrosion inhibitors are selected from the group of the conventional VpCI/VCI components.

11. The use according to claim 10, wherein the vapour phase corrosion inhibitors are selected from the group which comprises aromatic and aliphatic amines and carboxylic acids, amino alcohols, organic and inorganic amine salts, amine and alkali nitrites, alkali salts of aromatic and aliphatic carboxylic acids, C₃- to C₅-aminoalkyldiols, primary aromatic amides, polysubstituted pyrimidines, benzotriazole and substituted benzotriazoles, benzimidazole and substituted benzimidazoles, as well as aromatic mercaptothiazoles.

12. A method for pretreating the surfaces of substrates, which are provided as carrier materials for vapour phase corrosion inhibitors, in order to facilitate or enable the subsequent fixing to those substrate surfaces of vapour phase corrosion inhibitors from an aqueous or aqueous-alcoholic solution comprising those active ingredients, which method comprises applying a substance combination as defined in any one of claims 1 to 5 as a primer by means of a wet film having a weight per unit area of ≥ 1 g/m².

13. The method according to claim 12, wherein the primer process is carried out by printing, knife application, brush coating or roller application with subsequent drying.

14. The method according to claim 12, wherein drying is carried out in ambient air, adapted to the water content of the wet film, in the temperature range from 60°C to 75°C in a drying channel or by means of infra-red radiators.

15. Use of substrates, which have been pretreated with a substance combination as defined in any one of claims 1 to 5 and dried, for the subsequent fixing to those substrates of vapour phase corrosion inhibitors from an aqueous or aqueous-alcoholic solution comprising those active ingredients.

16. A carrier material for vapour phase corrosion inhibitors, wherein the vapour phase corrosion inhibitors are fixed to a substrate surface, which has been pretreated with a substance combination as defined in any one of claims 1 to 5.

17. The carrier material according to claim 16, the method according to claim 12 or the use according to claim 15, wherein the substrates are non-metallic substrates.

18. A substance combination which comprises urea, at least one chitosan biopolymer having a degree of deacetylation of from 70% to 95%, and at least one dicarboxylic acid in aqueous solution, wherein the chitosan is present as component (1) in an amount of from 0.1 to 2% by weight, urea is present as component (2) in an amount of from 10 to 25% by weight, and a dicarboxylic acid is present as component (3) in an amount of from 0.5 to 2.5% by weight, completely dissolved in deionised water.

19. The substance combination according to claim 18, in which the water-soluble dicarboxylic acid is selected from the group of the aliphatic saturated dicarboxylic acids.

20. The substance combination according to claim 19, wherein the dicarboxylic acid is selected from the group which comprises butanedioic acid, pentanedioic acid, hexanedioic acid, heptanedioic acid, 2-aminobutanedioic acid, 2-aminopentanedioic acid and mixtures thereof.

21. The substance combination according to any one of claims 18 to 20, which further comprises also cellulose-based, non-ionic thickeners as viscosity regulators.

22. A substrate surface which is coated with a substance combination as defined in any one of claims 18 to 21 or with a corresponding dried substance combination, wherein the substrates are non-metallic substrates.

23. The substrate surface according to claim 22, wherein the substrates are selected from the group which comprises paper, cardboard, flat or sheet-form plastics materials, biopolymers, textile woven fabrics, nonwovens and similar hydrophilic materials in flat or sheet form and/or from the group which comprises polyethylene, polypropylene, polyurethane, polystyrene, ABS, PLA and PHB and other hydrophobic materials.

## Revendications

1. Utilisation d'une combinaison de substances, laquelle comprend de l'urée, au moins un biopolymère de chitosan avec un degré de désacétylation de 70 % à 95 % ainsi qu'au moins un acide dicarboxylique dans une solution aqueuse, en tant qu'amorce pour le prétraitement des surfaces de substrats, qui sont prévus en tant que matériaux de support pour des inhibiteurs de corrosion en phase vapeur, afin de favoriser ou de permettre la fixation suivante d'inhibiteurs de corrosion en phase vapeur composés d'une solution aqueuse ou hydroalcoolique contenant ces principes actifs sur ces surfaces de substrat.

2. Utilisation selon la revendication 1, pour laquelle l'acide dicarboxylique hydrosoluble est choisi dans le groupe des acides dicarboxyliques saturés aliphatiques.

3. Utilisation selon la revendication 2, dans laquelle l'acide dicarboxylique est choisi dans le groupe qui comprend l'acide butanedioïque, l'acide pentanedioïque, l'acide hexanedioïque, l'acide heptanedioïque, l'acide 2-aminobutanedioïque, l'acide 2-aminopentanedioïque et des mélanges de ceux-ci.

4. Utilisation selon l'une quelconque des revendications 1 à 3, dans laquelle dans la combinaison de substances le chitosan est présent de manière entièrement dissoute en tant que composant (1) avec un pourcentage de 0,1 à 2 % en poids, l'urée en tant que composant (2) avec 10 à 25 % en poids et un acide dicarboxylique en tant que composant (3) avec un pourcentage de 0,5 à 2,5 % en poids dans l'eau désionisée.

5. Utilisation selon l'une quelconque des revendications 1 à 4, dans laquelle la combinaison de substances comprend en outre encore des épaississants à base de cellulose non ioniques en tant que régulateurs de viscosité.

6. Utilisation selon l'une quelconque des revendications 1 à 5, dans laquelle les substrats sont des substrats non métalliques.

7. Utilisation selon l'une quelconque des revendications 1 à 6, dans laquelle les substrats sont choisis dans le groupe lequel comprend du papier, du carton, des matières plastiques planes, des biopolymères, des tissus textiles et des non-tissés, ainsi que des matériaux similaires sous forme plane.

8. Utilisation selon l'une quelconque des revendications 1 à 7, dans laquelle les substrats sont choisis dans le groupe lequel comprend du polyéthylène, du polypropylène, du polyuréthane, du polystyrène, de l'ABS, du PLA et du PHB et d'autres matériaux hydrophobes.

9. Utilisation selon l'une quelconque des revendications 1 à 8, dans laquelle les substrats sont des matériaux de support pour la protection contre la corrosion de matériaux métalliques pendant des processus d'emballage, de stockage et de transport.

10. Utilisation selon l'une quelconque des revendications 1 à 9, dans laquelle les inhibiteurs de corrosion en phase vapeur sont choisis dans le groupe des composants VpCI/VCI habituels.

11. Utilisation selon la revendication 10, dans laquelle les inhibiteurs de corrosion en phase vapeur sont choisis dans le groupe lequel comprend des amines et acides carboxyliques aromatiques et aliphatiques, des aminoalcools, des sels d'amine organiques et anorganiques, des nitrites d'amine et alcalins, des sels alcalins d'acides carboxyliques aromatiques et aliphatiques, des aminoalkyldiols avec C₃ à C₅, des amides aromatiques primaires, des pyrimidines substitués plusieurs fois, du benzotriazole et des benzotriazoles substitués, du benzimidazole et des benzimidazoles substitués ainsi que des mercaptothiazoles aromatiques.

12. Procédé pour le prétraitement des surfaces de substrats, qui sont prévus en tant que matériaux de support pour des inhibiteurs de corrosion en phase vapeur, afin de favoriser ou de permettre la fixation suivante d'inhibiteurs de corrosion en phase vapeur sur ces surfaces de substrat composés d'une solution aqueuse ou hydroalcoolique contenant ces principes actifs, lequel comprend l'application d'une combinaison de substances telle que définie dans une des revendications 1 à 5 en tant qu'amorce par un film humide avec une masse surfacique ≥ 1 g/m².

13. Procédé selon la revendication 12, dans lequel le processus d'amorce s'effectue par impression, raclage, couchage ou roulage avec séchage subséquent.

14. Procédé selon la revendication 12, dans lequel le séchage s'effectue à l'air ambiant, de manière adaptée à la teneur en eau du film humide dans la plage de températures de 60 °C à 75 °C dans le tunnel de séchage ou par l'intermédiaire d'un émetteur de rayons infrarouges.

15. Utilisation de substrats, lesquels ont été prétraités et séchés avec une combinaison de substances telle que définie dans une des revendications 1 à 5, pour la fixation suivante d'inhibiteurs de corrosion en phase vapeur composés d'une solution aqueuse ou hydroalcoolique contenant ces principes actifs sur ces substrats.

16. Matériau de support pour inhibiteurs de corrosion en phase vapeur, dans lequel les inhibiteurs de corrosion en phase vapeur sont fixés sur une surface de substrat, qui a été prétraitée avec une combinaison de substances telle que définie dans une des revendications 1 à 5.

17. Matériau de support selon la revendication 16, procédé selon la revendication 12 ou utilisation selon la revendication 15, dans lequel les substrats sont des substrats non métalliques.

18. Combinaison de substances, laquelle comprend de l'urée, au moins un biopolymère de chitosan avec un degré de désacétylation de 70 % à 95 % ainsi qu'au moins un acide dicarboxylique dans une solution aqueuse, dans laquelle le chitosan est présent de manière entièrement dissoute dans de l'eau désionisée en tant que composant (1) avec un pourcentage de 0,1 à 2 % en poids, l'urée en tant que composant (2) avec 10 à 25 % en poids et un acide dicarboxylique en tant que composant (3) avec un pourcentage de 0,5 à 2,5 % en poids.

19. Combinaison de substances selon la revendication 18, pour laquelle l'acide dicarboxylique hydrosoluble est choisi dans le groupe des acides dicarboxyliques saturés aliphatiques.

20. Combinaison de substances selon la revendication 19, dans laquelle l'acide dicarboxylique est choisi dans le groupe qui comprend l'acide butanedioïque, l'acide pentanedioïque, l'acide hexanedioïque, l'acide heptanedioïque, l'acide 2-aminobutanedioïque, l'acide 2-aminopentanedioïque et des mélanges de ceux-ci.

21. Combinaison de substances selon l'une quelconque des revendications 18 à 20, laquelle comprend en outre encore des épaississants à base de cellulose non ioniques en tant que régulateurs de viscosité.

22. Surface de substrat, laquelle est revêtue d'une combinaison de substances telle que définie dans une des revendications 18 à 21 ou d'une combinaison de substances séchée correspondante, dans laquelle il s'agit de substrats non métalliques.

23. Surface de substrat selon la revendication 22, dans laquelle les substrats sont choisis dans le groupe lequel comprend du papier, du carton, des matières plastiques planes, des biopolymères, des tissus textiles, des non-tissés et des matériaux similaires sous forme plane et/ou dans le groupe lequel comprend du polyéthylène, du polypropylène, du polyuréthane, du polystyrène, de l'ABS, du PLA et du PHB et d'autres matériaux hydrophobes.
